# EUROPÄISCHE PATENTSCHRIFT

(11) **EP 4 259 926 B1**
(45) Veröffentlichungstag und Bekanntmachung des Hinweises auf die Patenterteilung: **19.11.2025**
(21) Anmeldenummer: 21830421.0
(22) Anmeldetag: 03.12.2021
(51) Int. Cl.: F03D 3/00, F03D 3/06, F03D 9/25

(54) **WINDKRAFTANLAGE MIT EINER VERTIKALEN ROTATIONSACHSE**
VERTICAL AXIS WIND TURBINE
ÉOLIENNE À AXE VERTICAL

(30) Priorität: 08.12.2020 DE 102020007543
(43) Veröffentlichungstag der Anmeldung: 18.10.2023
(73) Patentinhaber: Grimm, Friedrich, 70376 Stuttgart (DE)
(72) Erfinder: Grimm, Friedrich, 70376 Stuttgart (DE)
(74) Vertreter: RDL Patentanwälte PartG mbB
(86) Internationale Anmeldenummer: PCT/EP2021/084288
(87) Internationale Veröffentlichungsnummer: WO 2022/122599

(56) Entgegenhaltungen:
- DE-A1- 2 827 044
- DE-B3- 102017 002 797
- JP-A- 2005 315 266

## Beschreibung

Die vorliegende Erfindung betrifft eine Windkraftanlage mit einer vertikalen Rotationsachse.

Die Windkraftanlage hat bevorzugt eine Vielzahl von Rotorblättern, bei der jedes einzelne Rotorblatt, vergleichbar mit einem Segelboot, beständig eine vertikale Achse umrundet und dabei einen Fahrweg auf einer kreisförmigen Umlaufbahn zurücklegt. Aus der Analogie zu einem Fahrzeug leitet sich die im Rahmen der Patentanmeldung benutzte Terminologie ab: Der Rotor hat dementsprechend ein von mindestens einem Motorgenerator gebildetes Fahrwerk, bei dem der Stator des Motorgenerators jeweils einen Fahrweg für den Läufer des Motorgenerators bildet und der Läufer über das Fahrwerk mit dem unteren Ringträger des Rotors verbunden und an einem Hinterschnitt des ringförmigen Hohlprofils der Basis gelagert ist. Bevorzugt hat die Windkraftanlage ein Tragwerk für die in einem Baugrund verankerbare Basis und für den Rotor. Die Basis weist ein ringförmiges, nach oben offenes Hohlprofil auf, das insbesondere als ein ringförmiges C-Profil für die Aufnahme von Stator und Läufer von mindestens einem Motorgenerator mit einem Fahrweg für ein Fahrwerk ausgebildet ist. Der Rotor erstreckt sich mit einem konstanten oder mit einem wechselnden Radius zu der vertikalen Rotationsachse über eine Höhe zwischen einem unteren, der Basis zugewandten Ringträger und mindestens einem oberen Ringträger und hat eine Vielzahl von Rotorblättern, die entweder einteilig, mehrteilig oder dreiteilig mit einem vorderen Flügelsegment mit einer Flügelnase, einem mittleren Flügelsegment, einem hinteren Flügelsegment mit einer Flügelhinterkante und mit Aktuatoren für eine Blattverstellung ausgebildet sind und sich mit einem variablen Flügelprofil entlang einer geraden Längsmittelachse mit einer Profilsehne zwischen der Flügelnase und der Flügelhinterkante erstrecken. Die Rotorblätter weisen als ein integraler Bestandteil des Tragwerks entweder Tragprofile einer selbsttragenden Gitterschale, oder paarweise angeordnete Tragseile eines von einem koaxial und konzentrisch zu der Rotationsachse angeordneten Mast abgespannten Seiltragwerks auf. Dabei ist der untere Ringträger mit dem Läufer und das ringförmige, nach oben offene Hohlprofil mit dem Stator des Motorgenerators verbunden, sodass das Fahrwerk des Rotors mit einem Hinterschnitt in das nach oben offene Hohlprofil eingreift und eine Kippsicherung für den Rotor bildet und ein Luftspalt mit einem definierten Spaltmaß zwischen dem Stator und dem Läufer dadurch sicherstellt, dass der Rotor im Betrieb der Windkraftanlage elektromagnetisch (mit einer elektromagnetischen Wicklung) bzw. magnetisch an den Fahrweg herangezogen wird. Die Windkraftanlagen können entsprechend der Beaufort-Skala bei Windstärken von 4-12 betrieben und in unterschiedlichen Größen hergestellt werden.

### Stand der Technik

Windkraftanlagen mit einer vertikalen Rotationsachse sind als sog. Darrieus-Rotoren nach ihrem Erfinder benannt und haben im Vergleich zu Windkraftanlagen mit einer horizontalen Rotationsachse den großen Vorteil, dass sie unabhängig von der jeweiligen Strömungsrichtung arbeiten. Dabei sind die Rotorblätter mit einem radialen Abstand zu der Rotationsachse angeordnet und haben ein symmetrisches Flügelprofil. Ausgehend von dem Betz'schen Gesetz, das für die Nutzung der in einer Strömung gespeicherten kinetischen Energie eine theoretische Obergrenze von knapp 60 % feststellt, erreichen bekannte Vertikalachsrotoren nur einen Wirkungsgrad von etwa 30 % bis maximal 45 %, während der maximale Wirkungsgrad bei Horizontalachsrotoren mit einem asymmetrischen Flügelprofil bei etwa 50 % liegt. Bei einer Windkraftanlage mit vertikaler Rotationsachse addieren sich die von den Rotorblättern bewirkten Sogkräfte zu einer großen, leeseitig wirksamen Schubkraft, die von der Tragkonstruktion aufgenommen werden muss. Darüber hinaus können periodisch auftretende Lastwechsel zu Schwingungen führen, die insbesondere bei größeren Turbinen schwer zu beherrschen sind. Bei bekannten, um eine horizontale Drehachse rotierenden Windkraftanlagen sind in der Regel drei in einem Winkel von 120 Grad radial voneinander beabstandete und über einen Rotorkopf mit der Nabe verbundene Rotorblätter vorgesehen. Auch hier bewirken die Rotorblätter sehr hohe, luvseitig wirksame Schubkräfte, die von dem Mast der Windkraftanlage aufgenommen werden müssen. Ein am Baugrund eingespannter Mast mit einem Azimutlager an seinem oberen Ende nimmt die leeseitig wirkende Schubkraft auf und trägt sie in den Baugrund ab. Dieses Tragwerk, bei dem sowohl der Mast als auch die Rotorblätter als biegebeanspruchte Tragglieder ausgebildet sind, gelangt ab einem Rotordurchmesser von etwa 170 m an eine strukturell bedingte Obergrenze. Mit zunehmender Höhe wächst die für eine am Baugrund eingespannte Mastkonstruktion erforderliche Masse im Vergleich zu der Masse des Rotors überproportional, sodass der Mast bzw. der Turm einen zunehmenden Anteil an den Erstellungskosten verursacht und auch optisch das dominierende Element der Windkraftanlage darstellt. Im Jahr 2018 betrug die installierte Leistung bei der Windenergie 52,5 GW an Land und auf See 6,4 GW. In der Summe hatte damit die Windenergie im Jahr 2018 einen Anteil von 18,6 % am deutschen Strombedarf. In Zukunft kann, selbst bei Einhaltung restriktiver Flächennutzungskriterien, dieser Anteil auf 400 TWh/a gesteigert werden, sodass die Windkraft dann 60 % des deutschen Strombedarfs erzeugen würde. Die größten Einzelanlagen, wie z.B. die Enercon E126, haben eine Nennleistung von 7580 kW bei einem Rotordurchmesser von 127 m und einer Nabenhöhe von 135 m. Das bedeutet, dass für den weiteren Ausbau der Windenergie auch zukünftig eine große Anzahl von Einzelanlagen erforderlich sein wird. Es ist daher wünschenswert, die Leistung einer einzelnen Windkraftanlage zu vervielfachen, um die Anzahl der Windkraftanlagen zu begrenzen. Der Ausbau der Windenergie stößt in der Bevölkerung auf Widerstand überall dort, wo die Windkraftanlagen in unmittelbarer Nähe zu Wohngebieten aufgestellt werden. Beklagt werden einerseits die Lärmentwicklung durch Schlaggeräusche, die von den am Mast vorbeilaufenden Rotorblättern hervorgerufen werden und andererseits optische Beeinträchtigungen durch den dynamischen Schattenwurf der Rotorblätter und die unübersehbare Drehbewegung des Rotors. Mit vorwiegend biegezug- und biegedruckbeanspruchten Bauteilen haben herkömmliche Windkraftanlagen heute eine strukturell bedingte Obergrenze erreicht. Aktuelle Entwicklungen zielen darauf ab, den Rotordurchmesser dreiflügeliger Windkraftanlagen auf mehr als 200 m zu erweitern. Schwerkraft und Dynamik werden diesen rotorbrechenden Experimenten physikalische Grenzen aufzeigen. Den Zusammenhang zwischen Größe und Strukturform hat bereits Galileo Galilei in der 1638 erstmals in Leiden erschienenen Veröffentlichung "discorsie demonstrationi mathematiche..." und in der 1890 in deutscher Übersetzung in Leipzig erschienenen Veröffentlichung "Unterredung und mathematische Demonstration über zwei Wissenszweige die Mathematik und die Fallgesetze betreffend" erläutert, wenn er auf einen Knochen bezugnehmend feststellt: "Hieraus erkennen wir nun, wie weder Kunst noch Natur ihre Werke unermesslich vergrößern können, sodass es unmöglich erscheint, immense Schiffe, Paläste oder Tempel zu erbauen, deren Ruder, Rahen, Gebälk, Eisenverkettung und andere Teile bestehen könnten, wie andererseits die Natur keine Bäume von übermäßiger Größe entstehen lassen kann, denn die Zweige würden schließlich durch das Eigengewicht zerbrechen; auch können die Knochen der Menschen, Pferde und anderer Tiere nicht übermäßig groß sein und ihrem Zweck entsprechen, denn solche Tiere könnten nur dann so bedeutend vergrößert werden, wenn die Materie fester wäre und widerstandsfähiger als gewöhnlich; sonst müssten bedeutende Verdickungen der Knochen gedacht werden, damit keine Deformationen eintreten. Zur Erläuterung habe ich euch einen Knochen gezeichnet...". Die Erkenntnis, dass man ein Tragsystem, das für eine bestimmte Größe optimal ausgelegt ist, nicht einfach skalieren kann, gilt insbesondere auch für Windturbinen mit horizontaler Rotationsachse. Für ein "Repowering", bei dem es gilt, vorhandene Windkraftanlagen durch neuere und leistungsstärkere zu ersetzen, eignen sich Windkraftanlagen, die als Einzelanlagen 10 bis 20 herkömmliche Windkraftanlagen ersetzen können, als Pioniere einer nächsten Generation von Windkraftanlagen besonders gut.

Aus der DE 10 2011 117 631 A1 geht eine Windkraftanlage mit vertikaler Rotationsachse hervor, bei der die aerodynamisch wirksamen Flügel einteilig sind und ein statisch wirksames Netzgitter aus Dreiecksmaschen bilden.

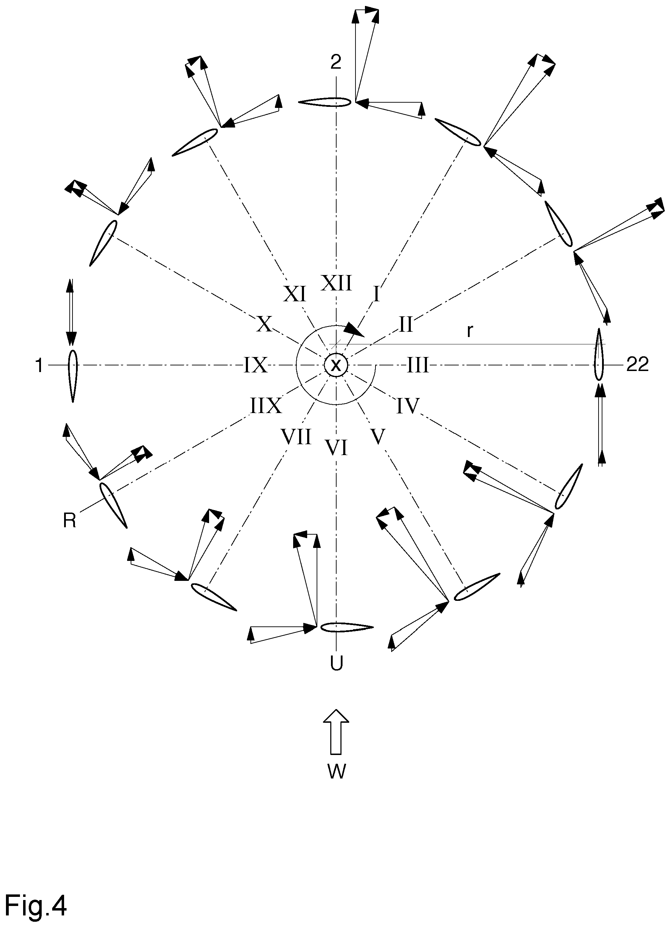

Aus der US 4 383 801 A geht ein verschwenkbares Rotorblatt für eine Windturbine mit vertikaler Rotationsachse hervor, das in der bevorzugten Ausführungsform einteilig ausgebildet ist, aber wie in Fig. 4 gezeigt auch zwei- oder dreiteilig ausgebildet sein kann. Der Gedanke eines in sich starren Flügelsegments als integraler Bestandteil der Tragstruktur ist hier nicht offenbart.

Aus der WO 2017 / 089 047 A1 geht eine Windkraftanlage mit vertikaler Drehachse hervor, bei der einteilige Rotorblätter drehbar auf einer Kreisbahn gelagert sind und mindestens teilweise mit einer gewölbten Oberseite in Leerichtung ausrichtbar sind. Aus der DE 10 2010 011 708 A1 geht eine Turbine mit passiver Schaufelstellung hervor, bei der ein Getriebe mit einem Gestänge eine Verstellung der Rotorblätter derart ermöglicht, dass sich die Saugseite jeweils leeseitig zur Windrichtung ausrichtet.

Aus der US 2008 / 0 267 777 A1 geht eine Windturbine mit vertikaler Rotationsachse hervor, deren Rotorblätter durch Zugseile gehalten werden und die in einer Reihe von Ausführungsbeispielen an ihrer Basis ein Fahrgestell mit einer kreisförmigen Schiene aufweist.

Aus der DE 10 2017 002 797 B3 geht ein Strömungskonverter mit einer horizontal oder vertikal angeordneten, ortsfesten Drehimpulsachse und mindestens einer Rotationsachse hervor, der dazu ausgebildet ist, die in einer Wind- oder Wasserströmung enthaltene kinetische Energie in eine Drehbewegung zu wandeln. Die asymmetrischen Flügelprofile sind als Wendeflügel ausgebildet, deren Saugseite regelmäßig von der Außenseite zu der Innenseite der Umlaufbahn wechselt.

Aus der US 2011 / 0 280 708 A1 geht eine Windkraftanlage mit drei spiralförmig um die vertikale Rotationsachse angeordneten Rotorblättern hervor. Die Umlaufbahn eines Rotorblatts weist von unten nach oben einen zunehmenden Kreisdurchmesser auf, wobei die Profilsehne der Rotorblätter bogenförmig ausgebildet ist und die Saugseite eines Rotorblatts auf der Außenseite der Umlaufbahn liegt.

Aus der US 2012 / 0 091 726 A1 geht ein Strömungskonverter mit einer Vielzahl von geraden Rotorblättern hervor, die an eine vertikale Rotationsachse angelenkt sind. Die Rotorblätter sind jeweils asymmetrisch ausgebildet und weisen ein Profil auf, dessen Saugseite zur Rotationsachse ausgerichtet ist.

Aus der US 2013 / 0 183 164 A1 geht eine Vertikalachsturbine hervor, bei der ein sich um die vertikale Rotationsachse windendes Rotorblatt aus herstellungstechnischen Gründen aus geraden, in sich verwundenen Flügelsegmenten aufgebaut ist.

Aus der US 9 267 490 B1 gehen unterschiedliche Techniken für die Anordnung der Rotorblätter einer Windkraftanlage um eine vertikale Rotationsachse hervor, die jeweils in Drehrichtung einen wechselnden Steigungswinkel aufweisen. Die Anordnungen der Rotorblätter sollen zyklische Belastungsspitzen verhindern und eine passive Begrenzung der Drehzahl ermöglichen.

Aus der US 7 726 934 B2 geht eine Vertikalachsturbine hervor, bei der eine Mehrzahl gerader Rotorblätter jeweils an ihrem oberen und an ihrem unteren Ende mit einem Ringträger verbunden sind, wobei der obere Ringträger einen kleineren Durchmesser als der untere Ringträger hat und für die Verbindung mit einer Nabe radiale Speichen vorgesehen sind.

Aus der US 2010 / 0 322 770 A1 geht eine Turbine insbesondere mit vertikaler Rotationsachse hervor, deren Rotorblätter jeweils ein symmetrisches Flügelprofil aufweisen, dessen aerodynamische Eigenschaften in einem ersten Längsabschnitt durch eine Ausnehmung auf der Außenseite und im zweiten Längsabschnitt durch eine Ausnehmung auf der Innenseite der Umlaufbahn verändert werden. Diese Ausnehmungen sollen einerseits das Anlaufen des Rotors erleichtern und andererseits eine Begrenzung der Rotordrehzahl ermöglichen. Innerhalb eines Rotorblatts wechseln die Ausnehmungen von der Innenseite auf die Außenseite der Umlaufbahn.

Aus der DE 38 25 241 A1 geht ein Darrieus-Rotor hervor, bei dem das Rotorblatt einen lastabtragenden Kern und eine darauf aufgesetzte aerodynamisch wirksame Schale aufweist, wobei der lastabtragende Kern auch von einem Stahlseil gebildet werden kann.

Aus der US 2008 / 0 095 608 A1 geht eine Windturbine mit vertikaler Rotationsachse hervor, bei der die einheitlich profilierten Rotorblätter an einem Gelenkarm gelagert sind, der ein Verkippen der Rotorblätter ermöglicht, sodass sich der Abstand der Rotorblätter zur Rotationsachse während eines Umlaufs ändert.

Die DE 28 27 044 A1 zeigt einen Windgenerator mit einem Rotor mit senkrechter Achse und einem Wechselstromgenerator, welcher Rotor einen Mast, Kränze, Spanndrähte und Hülsen aufweist und sich zwischen einem unteren Kranz und einem oberen Kranz erstreckt und Schaufeln aufweist, welche Schaufeln verformbar sind, ein symmetrisches bikonvexes aerodynamisches Profil und ein hohles asymmetrisches Profil aufweisen können, in der Nähe ihrer Anströmkante über eine Achse angelenkt sind und am Ende der Abströmkante über Gurte angelenkt sind, welcher Rotor sich mit einer Drehzahl um die senkrechte Achse dreht, welcher untere Kranz über einen Treibriemen mit dem Wechselstromgenerator gekoppelt ist.

Die JP 2005 - 315 266 A zeigt ein Windkraft-Leistungserzeugungssystem mit einem Rahmen und einem Impeller.

### Aufgabenstellung

Ausgehend von dem dargestellten Stand der Technik liegt der Erfindung die Aufgabe zugrunde, eine verbesserte Windkraftanlage mit vertikaler Rotationsachse anzugeben. Diese Aufgabe wird mit den im Anspruch 1 genannten Merkmalen der Erfindung gelöst.

Die einzelnen Teilsysteme, wie das Tragsystem, das von den Rotorblättern des Rotors gebildete aerodynamische System, das Fahrsystem des Rotors und das elektromagnetische System des Motorgenerators sind auf neuartige Weise zu einem Gesamtsystem integriert. Im Betrieb der Windkraftanlage können magnetische Anziehungskräfte des Motorgenerators, insbesondere elektromagnetisch oder permanentmagnetisch erzeugte Anziehungskräfte, genutzt werden, um den Rotor mit dem Fahrweg der Basis zu verspannen. Der Wirkungsgrad der Windkraftanlage wir bevorzugt so verbessert, dass kein Unterschied mehr zu dem Wirkungsgrad einer Windkraftanlage mit horizontaler Rotationsachse besteht. Die Windkraftanlage kann gemäß der Beaufort-Skala bereits bei schwachem Wind anlaufen. Das aerodynamische System kann im Betrieb der Windkraftanlage stufenlos an starken Wind und schweren Sturm angepasst werden. Schließlich ermöglicht die Windkraftanlage eine Kippsicherung für den Rotor der Windkraftanlage, um in allen Betriebszuständen der Windkraftanlage einen Luftspalt mit einem konstanten oder weitgehend konstanten Spaltmaß zwischen dem Stator und dem Läufer des Motorgenerators zu gewährleisten, sodass einer neuen Generation von Windkraftanlagen mit vertikaler Rotationsachse für die weltweit notwendige Energiewende genutzt werden kann.

### Die Integration der Systeme der Windkraftanlage

Die Windkraftanlage hat ein Tragsystem für eine in einem Baugrund verankerbare Basis und für einen Rotor. Die Basis weist ein ringförmiges, nach oben offenes Hohlprofil für die Aufnahme von Stator und Läufer eines synchron erregten Motorgenerators mit einem Fahrweg für ein Fahrwerk auf. Der Rotor bildet das aerodynamische System der Windkraftanlage und erstreckt sich mit einem konstanten oder mit einem wechselnden Radius zu der vertikalen Rotationsachse über eine Höhe zwischen einem unteren, der Basis zugewandten Ringträger und mindestens einem oberen Ringträger und weist eine Vielzahl von dreiteiligen Rotorblättern mit variablen Flügelprofilen und mit geraden Längsachsen auf. Die Rotorblätter weisen Rotorblattverstellungen mit Aktuatoren für eine Blattverstellung auf und sind entweder einteilig, mehrteilig oder dreiteilig mit einem vorderen Flügelsegment mit einer Flügelnase, einem mittleren Flügelsegment, einem hinteren Flügelsegment mit einer Flügelhinterkante ausgebildet. Tragprofile oder Tragseile des Tragsystems bilden einen integralen Bestandteil der mit dem unteren Ringträger verbundenen Rotorblätter des Rotors. Das Tragsystem für das aerodynamische System ist entweder als eine selbsttragende, aus Tragprofilen, Ringträgern und Spannseilen aufgebaute Gitterschale oder als ein von Tragseilen, Spannseilen und Ringträgern gebildetes und an mindestens einer Nabe von einem koaxial und konzentrisch zu der vertikalen Rotationsachse angeordneten Mast abgespanntes Seiltragwerk ausgebildet. Die mittleren Flügelsegmente der Rotorblätter sind mit den Ringträgern starr verbunden und weisen als ein integraler Bestandteil des Tragwerks entweder Tragprofile für eine selbsttragenden Gitterschale, oder Tragseile für ein von einem koaxial und konzentrisch zu der Rotationsachse angeordneten Mast abgespannten Seiltragwerk auf. Dabei ist der untere Ringträger mit dem Läufer und das ringförmige, nach oben offene Hohlprofil mit dem Stator des Motorgenerators verbunden, sodass das Fahrwerk des Rotors mit einem Hinterschnitt in das nach oben offene Hohlprofil eingreift und eine Kippsicherung für den Rotor bildet und ein Luftspalt mit einem definierten Spaltmaß zwischen dem Stator und dem Läufer sicherstellt dass der Rotor im Betrieb der Windkraftanlage elektromagnetisch an den Fahrweg herangezogen wird.

Weitere Aufgaben und vorteilhafte Eigenschaften der Erfindung gehen aus den Unteransprüchen hervor. Im Einzelnen kann die Erfindung eine oder mehrere der folgenden vorteilhaften Eigenschaften haben:
- Angabe einer Windkraftanlage, die nach der Beaufort-Skala bei Windstärken von 3-12 betrieben werden kann,
- Angabe eines dreiteiligen Rotorblatts, das auf der Umlaufbahn des Rotors variable Betriebsstellungen für Windstärken von 3-5 und 5-9 sowie 9-12 entsprechend der Beaufort-Skala einnehmen kann,
- Angabe einer pneumatisch, hydraulisch, elektrisch oder mechanisch betreibbaren Blattverstellung für das dreiteilige Rotorblatt,
- Angabe Auftrieb erzeugender Ringträger für den Rotor mit einer gewölbten Oberseite und einer flachen Unterseite,
- Angabe eines Rotors, bei dem Tragprofile oder Tragseile des Tragwerks einen integralen Bestandteil der Rotorblätter bilden,
- Angabe eines Rotors, bei dem das Tragwerk als eine selbsttragende Gitterschale ausgebildet ist,
- Angabe eines Rotors, bei dem das Tragwerk ein von einem Mast abgespanntes Seiltragwerk für die Rotorblätter aufweist,
- Angabe von Tellerfedern zur Vorspannung des Seiltragwerks,
- Angabe einer Speichenradkonstruktion für die Verbindung des Masts mit den Ringträgern des Rotors,
- Angabe eines Seiltragwerks mit vertikalen Abschnitten zwischen den Ringträgern, die an dem Mast aufgehängt und mit dem Mast verspannt sind,
- Angabe eines Seiltragwerks, bei dem der Mast einen Großteil des Rotorschubs und des Kippmoments aufnimmt,
- Angabe eines Hinterschnitts zwischen dem Hohlprofil der Basis und dem Fahrwerk des unteren Ringträgers des Rotors als eine Kippsicherung für die Windkraftanlage, als Kippsicherung für die Windkraftanlage,
- Angabe eines mit dem ringförmigen Sockel verbundenen Fahrwegs,
- Angabe eines von dem Stator des Motorgenerators gebildeten Fahrwegs für den Läufer des Motorgenerators,
- Angabe einer berührungslosen Verbindung zwischen dem Stator und dem Läufer eines Motorgenerators an der Basis der Windkraftanlage,
- Angabe eines Motorgenerators, dessen Stator mit dem ringförmigen Sockel und dessen Läufer mit dem unteren Ringträger des Rotors verbunden ist,
- Angabe eines schaltbaren elektromagnetischen Stabilisierungssystems für den Rotor bei der vier kreisringförmige Motorgeneratoren jeweils in radiale Sektoren unterteilt sind und in Übereinstimmung mit der jeweiligen Windrichtung auf der Luvseite den Rotor an die Basis heranziehen und auf der Leeseite von der Basis abstoßen,
- Angabe eines Motorgenerators, der den Rotor bei schwachem Wind auf die notwendige Anlaufgeschwindigkeit beschleunigt.
- Angabe einer Vielzahl von Piezoelementen für die reversible Verformung eines einteiligen Rotorblatts, das mit dem Tragelement eines Rotorblatts verbunden ist,
- Angabe eines einteiligen, pneumatisch verformbaren Rotorblatts bei dem zwei an dem Tragwerk der Windkraftanlage anliegende Schläuche in einem Umlauf des Rotorblatts den Wechsel der Saugseite bewirken,
- Angabe eines dreiteiligen Rotorblatts mit einem mittleren Blattsegment für die Aufnahme einer Vielzahl von Aktuatoren
- Angabe von an den Drehachsen des mittleren Flügelsegments paarweise einander gegenüberlegenden Schläuchen als Aktuatoren für die Blattverstellung,
- Angabe eines Aktuators, der als ein pneumatischer Muskel ausgebildet ist und innerhalb des mittleren Flügelsegments parallel zu der Profilsehne alternierend kürzt und verlängert,
- Angabe eines Aktuators als ein Schritt-Rastgetriebe mit Zylindergesperren für das vordere und das hintere Flügelsegment

### Das aerodynamische System der Windkraftanlage

In einer ersten Ausführungsvariante der Erfindung ist das mehrteilige Rotorblatt dreiteilig ausgebildet und besitzt ein aus drei in sich starren Flügelsegmenten aufgebautes variables Flügelprofil. Das dreiteilig aufgebaute Rotorblatt weist zwei gegeneinander verdrehbare und in der jeweiligen Blattstellung feststellbare Blattsegmente auf. Entsprechend ist auch das variable Flügelprofil dreiteilig ausgebildet, wobei zwischen einem vorderen, der Flügelnase zugehörenden Flügelsegment, einem mittleren, im Bereich der maximalen Profildicke mit dem Tragwerk verbundenen Flügelsegment und einem hinteren Flügelsegment mit der Flügelhinterkante Scharniere mit Drehachsen für einen definierten Drehbereich ausgebildet sind. Das dreiteilige variable Flügelprofil hat in einer Grundstellung ein symmetrisches Flügelprofil, dessen Profilsehne tangential zu der kreisförmigen Umlaufbahn des Rotors ausgerichtet ist, wobei die Profilsehne durch Verschwenken des vorderen und des hinteren Flügelsegments einen positiven Anstellwinkel gegenüber einer Tangente an der Umlaufbahn des Rotors einnimmt, und das variable Flügelprofil zu einem asymmetrischen Flügelprofil variiert ist. In einem Umlauf des Rotors nimmt das variable Flügelprofil unterschiedliche Betriebsstellungen ein und weist in einer Grundstellung ein symmetrisches, tangential zu dem Radius der Umlaufbahn angeordnetes variables Flügelprofil auf, das in ein asymmetrisches Flügelprofil wandelbar ist. Im Betrieb der Windkraftanlage ist die Saugseite des variablen Flügelprofils im luvseitigen Umlauf des Rotors zu der Innenseite der Umlaufbahn orientiert, während die Saugseite des variablen Flügelprofils im leeseitigen Umlauf des Rotors zu der Außenseite der Umlaufbahn orientiert ist. Um die Drehzahl des Rotors zu begrenzen, wird die Saugseite des variablen Flügelprofils im luvseitigen Umlauf des Rotors zu der Außenseite und im leeseitigen Umlauf des Rotors zu der Innenseite der Umlaufbahn orientiert, sodass der Rotor nur noch geringe tangentiale Antriebskräfte generiert und deshalb auch bei Sturm betrieben werden kann. Das vordere und das hintere Flügelsegment sind mittels von Scharnieren an das Tragprofil angelenkt und ermöglichen ein Ein- und Ausdrehen des vorderen und hinteren Flügelsegments jeweils um bis zu sieben Grad auf der Umlaufbahn gegenüber der oben gezeigten symmetrischen Grundstellung des variablen Flügelprofils. Überblattungsstöße mit Haarfugen stören die laminare Umströmung des variablen Flügelprofils in Form eines Clark YM15-Profils möglichst wenig. Die dreiteilig ausgebildeten Rotorblätter mit dem variablen Flügelprofil und die in der Figurenbeschreibung weiter erläuterten unterschiedlichen Flügelstellungen ermöglicht nicht nur den Wirkungsgrad einer Windkraftanlage mit horizontaler Rotationsachse zu erreichen, sondern auch die Windkraftanlage mit vertikaler Rotationsachse bei jeder Windstärke ab Windstärke 4 zu betreiben. Eine weitere Ausführungsform der Erfindung betrifft eine Rohrkonstruktion für die selbsttragende Gitterschale, die aus dreiteilig ausgebildeten Rotorblättern mit einem variablen Flügelprofil aufgebaut ist. Dabei wird das Tragwerk von konzentrisch und koaxial zu den Längsmittelachsen der Rotorblätter angeordneten Rundhohlprofilen gebildet, die als Tragprofile an Knotenpunkten untereinander verbunden sind und das mittlere Flügelsegment des variablen Flügelprofils bilden, wobei das vordere und das hintere Flügelsegment formschlüssig an die Außenoberfläche des Rundhohlprofils anschließen. Das vordere und das hintere Flügelsegment sind um die Drehachse derart drehbar, dass die Saugseiten der Rotorblätter im luvseitigen Umlauf des Rotors zu der Innenseite und im leeseitigen Umlauf des Rotors zu der Außenseite der Umlaufbahn orientiert sind und das Drehen der Flügelsegmente mechanisch, elektrisch oder hydraulisch erfolgt. Ein Rotorumlauf einer Windkraftanlage mit 200 m Durchmesser dauert etwa 80 Sekunden, sodass genug Zeit bleibt, um am Übergang vom luvseitigen Umlauf in den leeseitigen Umlauf des Rotors die Rotorblätter zu verstellen. Zum Vergleich bei einer Windkraftanlage mit 3 m Durchmesser dauert ein Umlauf des Rotors bei einer angenommenen Windgeschwindigkeit von 10 m/s nur 6 Sekunden. Daraus ergeben sich erhöhte Anforderungen an die Agilität der Blattverstellung, die in diesem Fall für 20 Lastwechsel pro Sekunde ausgelegt ist.

In einer zweiten Ausführungsvariante der Erfindung weist das mehrteilig ausgebildete Rotorblatt mit dem variablen Flügelprofil eine dehnsteife und biegeweiche Flügelschale und zwei mit dem Tragwerk des Rotors verbundene Faltenbalge auf.

### Pneumatische Aktoren für die Blattverstellung

In einer ersten Ausführungsvariante hat das mehrteilige Rotorblatt eine dehnsteife und biegeweiche Flügelschale, die mit einer Vielzahl von quer zu der Profilsehne angeordneten Stegen verbunden ist. Das Tragprofil ist z.B. als ein Doppel T Profil ausgebildet das zwei mit dem Tragwerk des Rotors verbundene Faltenbalge aufnimmt, die an den Umlaufpositionen III, IX der Umlaufbahn parallel zu der Profilsehne des symmetrischen Flügelprofils angeordnet und durch Vulkanisation mit der dehnsteifen und biegeweichen Flügelschale des variablen Flügelprofils verbunden sind. Druckluft, die mittels von Kompressoren und Ventilen von dem einen in den anderen Faltenbalg gepumpt wird, bewirkt eine elastische Verformung des variablen Flügelprofils, wobei sich eine Vielzahl von senkrecht zu der Profilsehne angeordneten Stegen, die an die biegeweiche Flügelschale angelenkt sind, derart verformen, dass an den Umlaufpositionen III, IX die Saugseite des variablen Flügelprofils im luvseitigen Umlauf zur Innenseite und im leeseitigen Umlauf zur Außenseite der Umlaufbahn wechselt.

Dabei bildet das Tragprofil des Rotorblatts ein Widerlager für die paarweise interagierenden Faltenbalge, die mittels von Druckluft alternierend geschrumpft und gedehnt werden, sodass die Saugseite des variablen Flügelprofils an den Umlaufpositionen III, IX der Umlaufbahn von der Außenseite zu der Innenseite der Umlaufbahn wechselt und umgekehrt, wobei sich die biegeweiche und dehnsteife Flügelschale des Rotorblatts reversibel verformt. In einer zweiten vorteilhaften Ausführungsvariante ist das Rotorblatt dreiteilig ausgebildet und hat vier dehnbare, an den Scharnieren des vorderen und des hinteren Flügelsegments auf der Umlaufbahn bevorzugt paarweise einander gegenüber liegende und bevorzugt parallel zu den Drehachsen angeordnete Schläuche. Die Schläuche werden mittels von Kompressoren und Ventilen für Druckluft derart betätigt, dass Druckluft von einem Schlauch in den jeweils gegenüberliegenden Schlauch gepumpt wird, sodass der Durchmesser des entleerten Schlauchs abnimmt und der Durchmesser des aufgepumpten Schlauchs zunimmt und das vordere und das hintere Flügelsegment auf diese Weise jeweils an den Drehachsen um maximal 7 Grad gegenüber dem mittleren starr mit dem Tragwerk verbundenen Flügelsegment verschwenkbar ist. In einer besonders bevorzugten Ausführungsvariante ist das mehrteilige Rotorblatt mindestens dreiteilig ausgebildet und wird an den Umlaufpositionen III, IX der Umlaufbahn mittels von vier an den Scharnieren des vorderen und des hinteren Flügelsegments jeweils paarweise einander gegenüber liegenden Faltenbalgen derart verstellt, dass Druckluft von einem Faltenbalg in den jeweils gegenüberliegenden Faltenbalg gepumpt wird, sodass sich die Länge des entleerten Faltenbalgs verkürzt und die Länge des aufgepumpten Faltenbalgs verlängert und auf diese Weise das vordere und das hintere Flügelsegment an den Drehachsen der Scharniere jeweils mit gegensinniger Drehrichtung um maximal 7 Grad gegenüber dem mittleren, von dem Tragprofil gebildeten Flügelsegment gedreht werden. Von besonderem Vorteil sind Aktoren, die von pneumatischen Muskeln gebildet werden und an den Umlaufpositionen III, IX der Umlaufbahn mit einem radialen Abstand parallel zu der Profilsehne des symmetrischen Flügelprofils innerhalb des mittleren Flügelsegments angeordnet sind. Die Blattverstellung des dreiteiligen Rotorblatts erfolgt in diesem Fall durch eine pneumatisch gesteuerte Längenänderung der pneumatischen Muskeln mittels von Kompressoren Ventilen und einer pneumatischen Steuerungseinheit. Bei dem mindestens dreiteiligen Rotorblatt können an dem vorderen und dem hinteren Flügelsegment jeweils Hebelarme ausgebildet werden, die mit einem Gegengewicht an den Drehachsen der Scharniere des mittleren Flügelsegments angelenkt sind und in das Innere des mittleren Flügelsegment hineinragen, sodass an dem rotierenden Rotor zentrifugale Kräfte des vorderen und des hinteren Flügelsegments ausbalanciert werden.

### Elektrische Aktoren für die Blattverstellung

In einer vorteilhaften Ausführungsvariante sind die Aktoren als lineare Schrittmotoren mit Statoren und Läufern ausgebildet und in das von dem mittleren Flügelsegment gebildete Tragprofil integriert. Die linearen Schrittmotoren treiben zylinderförmige Schlitten an, die an ihren Innenseiten an koaxial und konzentrisch zu den beiden Drehachsen der Scharniere linear geführt werden und an ihren Außenseiten in Gewindeabschnitte der vorderen und der hinteren Flügelsegmente eingreifen, wobei die Aktoren mit einer elektromagnetisch oder hydraulisch oder pneumatisch oder mechanisch angetriebenen linearen Translationsbewegung eines zylinderförmigen Schlittens das Ein- und Ausdrehen der vorderen und der hinteren Flügelsegmente gegenüber dem von dem kastenförmigen Tragprofil gebildeten mittleren Flügelsegment bewirken und die geringe Steigung der Gewindeabschnitte bevorzugt eine Übersetzung von 1 zu 10 für die Kraft der Aktoren ermöglicht. In einer besonders vorteilhaften Ausführungsvariante sind die Aktoren als radiale Schrittmotoren ausgebildet und weisen einen von zwei Blechpaketen mit gegensinnigen Erregerwicklungen gebildeten Stator auf, der in jedem Längsabschnitt in das mittlere Flügelsegment des Rotorblatts integriert ist und zusammen mit alternierend gepolten Permanentmagneten der Läufer den Schrittmotor bildet. Die Permanentmagnete der Läufer sind an die Drehachsen der Scharniere des dreiteiligen Rotorblatts angelenkt und bilden ein Gegengewicht zu dem vorderen und dem hinteren Flügelsegment des dreiteiligen Rotorblatts. Beidseitige Luftspalte zwischen den Permanentmagneten des Läufers und den beiden Blechpaketen des Stators ermöglichen die Ausbildung einer berührungslosen elektrischen Verbindung zwischen dem mittleren Flügelsegment und den vorderen und hinteren Flügelsegmenten. Durch Umpolung der Erregerwicklungen wird das elektrische Ein- und das Ausdrehen des vorderen und des hinteren Flügelsegments an den Umlaufpositionen III, IX ermöglicht. Die Ausbildung eines Schritt-Rastgetriebes für das Ein- und Ausdrehen des vorderen und des hinteren Flügelsegments in den Längsabschnitten des Rotorblatts mit einer koaxial und konzentrisch zu der Längsachse des Rotorblatts angeordneten Antriebswelle den Vorteil eines Zylindergesperres für die vorderen und des hinteren Flügelsegmente im luv- und leeseitigen Umlauf der Rotorblätter, wobei die Drehrichtung des Schritt-Rastgetriebe an den Umlaufpositionen III, IX in einem Umlauf des Rotorblatts zweimal wechselt.

### Zwei unterschiedliche Tragsysteme für die Windkraftanlage

In einer ersten vorteilhaften Ausführungsvariante ist das Tragwerk des Rotors als eine selbsttragende Gitterschale ausgebildet. Dabei sind die mittleren Flügelsegmente des variablen Flügelprofils als im Querschnitt kastenförmige Tragprofile ausgebildet, die bevorzugt mittels von Knotenpunkten untereinander verbunden sind und bevorzugt zusammen mit seilverspannten, queraussteifenden Ringträgern eine selbsttragende Gitterschale bilden, die sich in Form eines Rotationshyperboloids zu dem ringförmigen Sockel hin erweitert. Die auf der Umlaufbahn einander gegenüberliegenden Flansche des kastenförmigen Tragprofils bilden den mittleren Teil der Oberfläche des variablen Flügelprofils. Sind die mittleren Flügelsegmente des variablen Flügelprofils als Rundhohlprofile ausgebildet, wird eine Verflechtung des Tragsystems mit dem aerodynamischen System ermöglicht, bei dem ein vorderes und ein hinteres Flügelsegment an das von dem Rundhohlprofil gebildete mittlere Flügelsegment angelenkt sind. Die selbsttragende Gitterschale hat dreieckige und/oder viereckige Felder. Das Tragsystem der Gitterschale ist einem triangulierten Fachwerk vergleichbar; in Verbindung mit der Schalenbauweise liegt die strukturell bedingte Obergrenze der Bauhöhe für die Windkraftanlage hier bei etwa 800 m. In einer zweiten Ausführungsvariante der Erfindung ist das Tragwerk des Rotors als ein von einem Mast abgespanntes Seiltragwerk ausgebildet. Mittels von Trag- und Spannseilen ist der Rotor an einem koaxial und konzentrisch zu der Rotationsachse angeordneten Mast aufgehängt. Tragseile auf der Umlaufbahn tragen die Rotorblätter und sind mittels von an den unteren Ringträger angreifenden Tellerfedern derart vorgespannt, dass auch die jeweils leeseitigen Tragseile in allen Betriebszuständen der Windkraftanlage unter Zugspannung stehen. Eine zweite Gruppe von Tragseilen verbindet die Naben mit den Ringträgern, und die Tragseile greifen dabei von oben an die Ringträger an, während Spannseile, welche die Ringträger mit den Naben verbinden, von unten an die Ringträger angreifen. Die Naben selbst sind mittels von Kegelrollenlagern an Queraussteifungen der Stahlbetonröhre des Masts gelagert. Dabei weisen die jeweils oberen Tragseile und die jeweils unteren Spannseile, bezogen auf einen Radius des Rotors, einen gegensätzlichen Versatzwinkel auf. Mittels einer Mehrzahl von hintereinander in Hülsen angeordneten Tellerfedern sind die Trag- und Spannseile vorgespannt und liegen zusammen mit den Ringträgern und den Naben auf der virtuellen Oberfläche eines Rotationsparaboloids. Die torsions-, biege- und schubsteife Ausbildung der Speichenräder überträgt mittels der Naben einen großen Teil des Biegemoments auf den zentralen Mast, der sich bei einigen Ausführungsbeispielen der Erfindung entlang einer Parabel zum Fußpunkt hin erweitert. An der Basis der Windkraftanlage überträgt das Seiltragwerk des Rotors etwa die Hälfte des Biegemoments auf das ringförmige Hohlprofil der Basis, während die zweite Hälfte von dem Mast auf das Fundament übertragen wird. Die oberen Ringträger sind begehbar und dienen als Wartungsgänge für die Inspektion der Rotorblätter. Mit zug- und druckbeanspruchten Tragsystemen gelingt es, weitspannende Brücken mit Spannweiten von 1000 bis 2000 m zu bauen. Die vorgeschlagene Windturbine mit einer Bauhöhe von 1000 m und mehr nutzt das arbeitsteilige Prinzip für einen druckbeanspruchten Mast, der als eine schlanke Röhre mit Queraussteifungen z.B. aus hochfestem Stahlbeton mit einer Stahlbewehrung der Werkstoffklasse 460 hergestellt werden kann und für einen von Zuggliedern und Rotorblättern gebildeten Rotor. Besonders vorteilhaft ist hier das vorgeschlagene Abspannsystem, bei dem die vertikalen Rotormodule abschnittsweise an dem zentralen Mast aufgehängt sind. Tellerfedern stellen sicher, dass sowohl die luvseitigen als auch die leeseitigen Tragseile unter Zugspannung stehen. Die mit den Tragseilen verbundenen Tellerfedern wirken als Dämpfer, um Lastspitzen zu brechen. Ein Rotorblatt ist jeweils an einem Paar von Tragseilen aufgehängt.

### Das Fahrsystem der Windkraftanlage

Bevorzugt ist der Fahrweg mit einem Hinterschnitt in dem ringförmigen Hohlprofil der Basis angeordnet. In einer ersten Ausführungsvariante weist der Fahrweg für das Fahrwerk des Motorgenerators mindestens ein innerhalb des ringförmigen Hohlprofils verlegtes Gleis mit zueinander geneigten Fahrschultern von Schienen für Räder (bevorzugt Stahlräder) mit Spurkränzen des Fahrwerks auf. Das Fahrwerk besteht in diesem Fall aus eine Vielzahl von Fahrgestellen, die jeweils mit mindestens zwei Radsätzen mit dem unteren Ringträger des Rotors derart verbunden sind, dass die Räder mittels von konischen Radlaufflächen formschlüssig auf den zueinander geneigten Fahrschultern der Schienen geführt werden und die Räder im Falle des von einem Mast abgespannten Seiltragwerks an hängenden Schienen geführt werden und die Kippsicherung für den Rotor bilden. Im Falle der selbsttragenden Gitterschale werden elektromagnetische Anziehungskräfte des Motorgenerators genutzt um den Rotor mit den Schienen zu verspannen. Dabei ist es von besonderem Vorteil die Schienen für das Fahrwerk mit einem Neigungswinkel zu der vertikalen Rotationsachse senkrecht zu einer Tangente der jeweiligen Tragrichtung der Gitterschale oder des Seiltragwerks anzuordnen. Das ringförmige Hohlprofil der Basis leitet die dynamischen Lasten des Rotors mittels von Pfählen über ein Fundament in einen tragfähigen Baugrund ein. Im Falle einer schwimmfähigen Basis ist die Windkraftanlage im Meeresgrund verankerbar. In einer besonders vorteilhaften Ausführungsvariante wird das Fahrsystem der Windkraftanlage von vier, jeweils mit einem Winkel von 45 Grad zueinander angeordneten Motorgeneratoren gebildet, die im Betrieb der Windkraftanlage eine berührungslose Lagerung des Rotors in dem ringförmigen Hohlprofil der Basis ermöglichen und als ein elektromagnetisches Fahrsystem des Rotors ausgebildet sind.

### Das dynamische Stabilisierungssystem der Windkraftanlage

Der Motorgenerator der Windkraftanlage ist als eine synchron erregte, dreiphasige Drehstrommaschine mit einem Durchmesser von 2 m bis 500 m ausgebildet. Der Läufer der Drehstrommaschine ist entweder mit Permanentmagneten oder mit Tragmagneten mit einer Erregerwicklung bestückt. Der Stator dagegen weist Blechpakete mit dreiphasigen Paketwicklungen für den stählernen Fahrweg auf, sodass der Rotor im Betrieb der Windkraftanlage elektromagnetisch an den Fahrweg herangezogen wird. Eine dynamische Kippsicherung wird mittels einer radialen Unterteilung des Ringgenerators in unabhängig voneinander schaltbare Ringsegmente dadurch ermöglicht, dass in Übereinstimmung mit der Windrichtung jeweils nur die luvseitige Hälfte der Drehstrommaschine als Generator arbeitet. Bei einer auch für sehr große Windkraftanlagen geeigneten Ausführungsvariante sind innerhalb des ringförmigen Hohlprofils vier Motorgeneratoren angeordnet, die ein mit dem unteren Ringträger des Rotors verbundenes Fahrwerk mit zwei oberen und zwei unteren, auf einem polygonalen Hohlprofil jeweils diagonal gegeneinander versetzt angeordneten Statoren mit vier Fahrwegen für vier mit dem Ringträger des Rotors verbundene Läufer aufweisen. Die Motorgeneratoren sind jeweils in eine Mehrzahl ringförmiger Segmente untergliedert, sodass, abhängig von der jeweiligen Windrichtung im luvseitigen Umlauf des Rotors, die beiden oberen Motorgeneratoren aktiviert werden und den Rotor an die Basis heranziehen, während im leeseitigen Umlauf des Rotors die beiden unteren Motorgeneratoren aktiviert werden und den Rotor von der Basis abstoßen. Auf diese Weise wird eine aktive Kippsicherung für den Rotor gebildet, sodass die Räder der Fahrgestelle des Fahrwerks exakt auf der von dem Gleis gebildeten Spur geführt werden. In einer besonders vorteilhaften Ausführungsvariante ermöglicht das von vier, jeweils mit einem Winkel von z.B. 45 Grad zueinander angeordneten Motorgeneratoren gebildete Fahrwerk im Betrieb der Windkraftanlage eine berührungslose Lagerung eines Leichtbau-Rotors in dem ringförmigen Hohlprofil der Basis.

Weitere vorteilhafte Eigenschaften der Erfindung gehen aus den Figuren hervor.

Es zeigen:
Fig. 1 eine Windkraftanlage in der Übersichtsansicht mit Hervorhebung des variablen Rotorblatts und des Hinterschnitts an der Basis der Windkraftanlage jeweils in isometrischer Darstellung,
Fig. 2 das variable Flügelprofil eines dreiteilig ausgebildeten Rotorblatts in drei unterschiedlichen Flügelstellungen in drei schematischen Querschnitten,
Fig. 3 das variable Flügelprofil nach Fig. 1-2 in zwölf Umlauf-Positionen des Rotors für die Windstärken 3-6 nach der Beaufort-Skala mit vektorieller Darstellung der aerodynamisch bewirkten Kräfte im Horizontalschnitt,
Fig. 4 das variable Flügelprofil nach Fig. 1-3 als symmetrisches Flügelprofil in zwölf Umlauf-Positionen des Rotors für die Windstärken 7-9 nach der Beaufort-Skala mit vektorieller Darstellung der aerodynamisch bewirkten Kräfte im Horizontalschnitt,
Fig. 5 das variable Flügelprofil nach Fig. 1-4 in zwölf Umlauf-Positionen des Rotors für die Windstärken 10-12 nach der Beaufort-Skala mit vektorieller Darstellung der aerodynamisch bewirkten Kräfte im Horizontalschnitt,
Fig. 6 die Windkraftanlage nach Fig. 1-4 in einem Detail der Verbindung des Rotors mit der Basis und mit einem Motorgenerator mit einem Fahrwerk in einer abgewickelten Perspektive,
Fig. 7 die Windkraftanlage nach Fig. 16, oben als Ausschnittdetail der Verbindung zwischen dem Mast und dem Rotor in zusammenhängenden perspektivischen Details und unten in einem Schnitt durch einen Ringträger des Rotors,
Fig. 8 die Windkraftanlage nach Fig. 1-7 in einem Ausschnittdetail der Verbindung zwischen dem dreiteiligen Rotorblatt und dem Ringträger des Rotors in einer Ausschnittperspektive,
Fig. 9 eine Windkraftanlage, deren Tragwerk als eine von einem Mast abgespannte Seilkonstruktion mit einem rotationshyperboloidförmigen Rotor ausgebildet ist, in der isometrischen Übersicht,
Fig. 10 die Windkraftanlage nach Fig. 9 in einem Detail der Verbindung des Rotors mit der Basis und mit einem Motorgenerator mit einem Fahrwerk in einer abgewickelten Perspektive,
Fig. 11 eine Windkraftanlage, deren Tragwerk als selbsttragende Gitterschale ausgebildet ist und aus zwei übereinandergestapelten Rotationshyperboloiden besteht, in der isometrischen Übersicht,
Fig. 12 das variable Flügelprofil der Windkraftanlage nach Fig. 11 als ein dreiteilig ausgebildetes Rotorblatt, bei dem das mittlere Flügelsegment als Kastenträger ausgebildet ist, in drei schematischen Querschnitten,
Fig. 13 die Windkraftanlage nach Fig. 11-12 im Detail mit dem Knotenpunkt der Gitterschale in einer perspektivischen Ausschnittdarstellung,
Fig. 14 die Windkraftanlage nach Fig. 11-13 in einem Detail der Verbindung des Rotors mit der Basis und mit vier mit einem Fahrwerk verbundenen Motorgeneratoren in einer abgewickelten Ausschnittperspektive,
Fig. 15 eine Windkraftanlage, deren Tragwerk als eine selbsttragende Gitterschale mit einem rotationshyperboloidförmigen Rotor ausgebildet ist, in der isometrischen Übersicht,
Fig. 16 ein variables Flügelprofil der Windkraftanlage nach Fig. 15 mit einem zweiteilig ausgebildeten Rotorblatt und einem mittleren Flügelsegment, das als Rundhohlprofil ausgebildet ist, in drei schematischen Querschnitten,
Fig. 17 die Windkraftanlage nach Fig. 15-16 im Detail mit einem Knotenpunkt der von Rundhohlprofilen gebildeten Gitterschale in einer perspektivischen Ausschnittdarstellung.
Fig. 18 oben zeigt einen elektromagnetischen Aktor, oben mit einer Erregerwicklung und unten als ein linearer Schrittmotor jeweils in der isometrischen Ausschnittdarstellung.
Fig. 19 einen Aktor, der als ein radialer Schrittmotor ausgebildet ist, in einer perspektivischen Ausschnittdarstellung.
Fig. 20 den Aktor nach Fig. 19, oben in einem schematischen Querschnitt mit einem symmetrischen Flügelprofil und in der Mitte und unten jeweils mit einem asymmetrischen Flügelprofil.
Fig. 21 paarweise angeordnete Aktoren, die von pneumatischen Muskeln gebildet werden, oben in einem schematischen Querschnitt des symmetrischen Flügelprofils und in der Mitte und unten jeweils mit einem asymmetrischen Flügelprofil.
Fig. 22 einen Aktor mit Elektroantrieb für ein Schritt-Rastgetriebe, oben mit einem symmetrischen Flügelprofil, in der Mitte und unten mit einem asymmetrischen Flügelprofil jeweils in einer perspektivischen Ausschnittdarstellung.
Fig. 23 einen alternativen elektrisch angetriebenen Aktor mit Schritt-Rastgetriebe, bei dem das Rastelement von einer Gewindeschnecke gebildet wird, in einer perspektivischen Ausschnittdarstellung.
Fig. 24 ein einteiliges Rotorblatt mit einer flexiblen Flügelschale, oben mit einem symmetrischen Flügelprofil, in der Mitte und unten jeweils mit einem asymmetrischen Flügelprofil jeweils im Querschnitt.

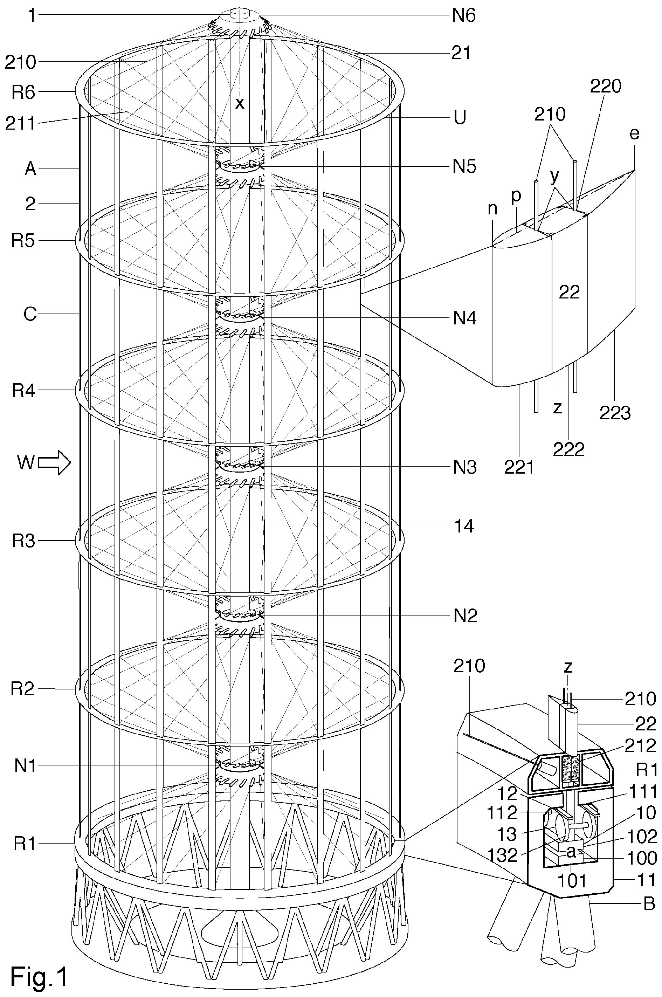

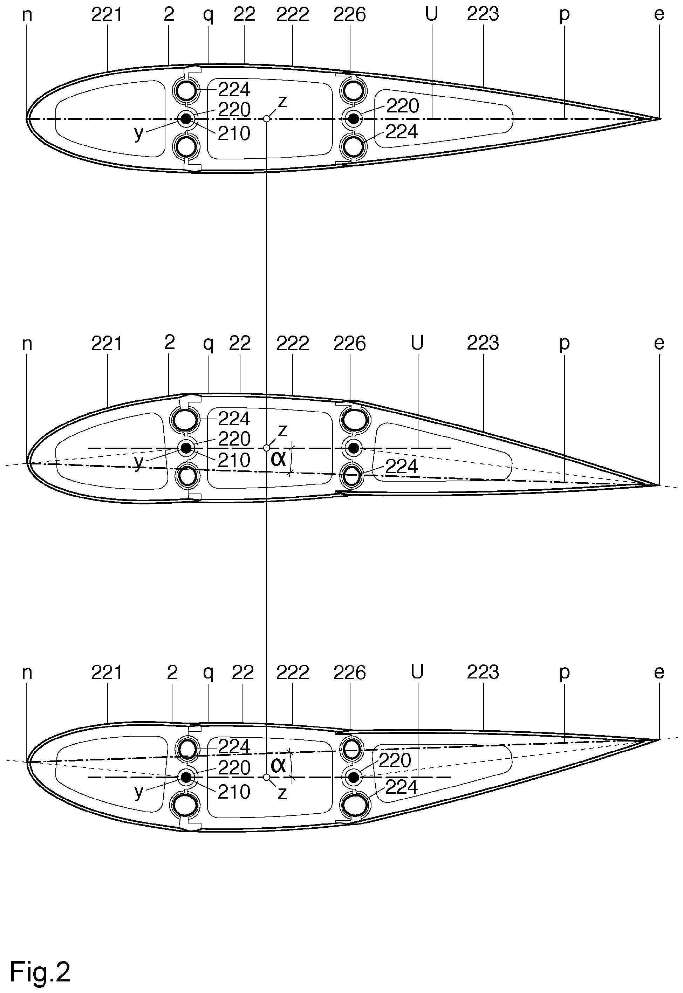

**Fig. 1** zeigt eine Windkraftanlage 1 mit vertikaler Rotationsachse x, deren Tragwerk A ein von einem koaxial und konzentrisch zu der Rotationsachse x angeordneten Mast 14 abgespanntes Seiltragwerk 21 aufweist. Das Seiltragwerk 21 ist mittels von sechs Naben N1-N6 mit Tragseilen 210, die jeweils von oben an äußere Ringträger R1-R6 angreifen und mittels von Spannseilen 211, die jeweils von unten an die äußeren Ringträger R1-R6 angreifen und mittels von bevorzugt paarweise angeordneten Spannseilen 211, die auf der Umlaufbahn U der variablen Rotorblätter 2 den obersten Ringträger R6 mit dem untersten Ringträger R1 verbinden, mit dem Mast 14 verspannt. Der untere Ringträger R1 greift mittels einer Hinterschneidung 111 in ein ringförmiges Hohlprofil 11 einer ortsfesten Basis B der Windkraftanlage 1 ein. Die Basis B zeigt eine von einem Fundament mit Pfählen und dem ringförmigen Hohlprofil 11 gebildete Fachwerkstruktur, mit der es gelingt, die Vorspannkräfte der Tragseile 210 in einen tragfähigen Baugrund am Meeresboden einzuleiten. Die Basis B des Masts 14 hat ein kegelförmig erweitertes Fundament. Während der Mast 14 etwa ein Drittel des Kippmoments an der Basis B aufnimmt, werden zwei Drittel des Kippmoments von den - bevorzugt paarweise angeordneten - Tragseilen 210 aufgenommen. Diese Tragseile 210 sind, wie in Fig. 2 gezeigt, mit dem mittleren Flügelsegment 222 des Rotorblatts 2 kraftschlüssig verbunden. Das vordere Flügelsegment 221 und das hintere Flügelsegment 223 sind jeweils mit einem Scharnier 220 an das mittlere Flügelsegment 222 angelenkt. Entsprechend der zur Basis B hin zunehmenden Beanspruchung nimmt der Durchmesser der Tragseile 210 bevorzugt von dem obersten Ringträger R6 bis zu dem untersten Ringträger R1 zu. Mittels einer Mehrzahl von Tellerfedern 212, die innerhalb einer Hülse angeordnet sind, werden die Tragseile 210 der variablen Rotorblätter 2 bevorzugt derart vorgespannt, dass im Betrieb der Windkraftanlage 1 sowohl die luvseitigen als auch die leeseitigen Rotorblätter 2 unter Zugspannung stehen. Der untere Ringträger R1 des Rotors R ist mittels eines Fahrwerks 13 in einem Hinterschnitt 111 des ringförmigen Hohlprofil 11 derart gelagert, dass eine Kippsicherung 12 für den Rotor R und ein Luftspalt a zwischen dem von dem Stator 100 des Motorgenerators 10 gebildeten Fahrweg 101 und dem mit dem Fahrwerk 13 und dem Läufer 102 des Motorgenerators 10 verbundenen unteren Ringträger R1 des Rotors R gebildet wird, wobei bevorzugt ein Gleis 110 mit hängenden Schienen 112 für das von Radsätzen 131 mit Rädern 132 gebildete Fahrwerk 13 des Rotors R vorgesehen ist. Die Räder 132 sind bevorzugt Stahlräder.

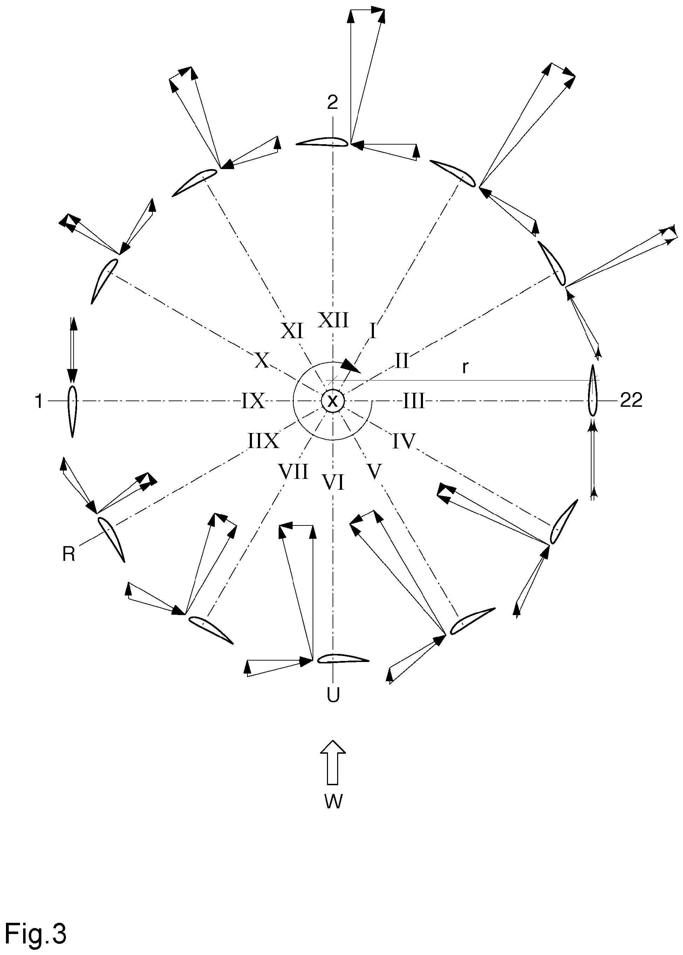

**Fig. 2** zeigt das dreiteilig bzw. dreisegmentig ausgebildete, variable Rotorblatt 2 mit einem variablen Flügelprofil 22 nach Fig. 1 in drei unterschiedlichen Blattstellungen: Oben als symmetrisch ausgebildetes Flügelprofil 22, dessen Profilsehne p als Tangente zu der Umlaufbahn U einen rechten Winkel zu dem Radius r der Umlaufbahn aufweist, in der Mitte als asymmetrisch ausgebildetes Flügelprofil 22 mit einem positiven Anstellwinkel α der Profilsehne p gegenüber einer Tangente an der Umlaufbahn U und unten als asymmetrisch ausgebildetes Flügelprofil 22 mit einem positiven Anstellwinkel α der Profilsehne p gegenüber einer Tangente an der Umlaufbahn U. Das mittlere Flügelsegment 222 ist im Bereich der maximalen Profildicke q mittels nicht näher dargestellter Seilklemmen kraftschlüssig mit paarweise angeordneten Tragseilen 210 verbunden. Scharniere 220, die ebenfalls kraftschlüssig mit den Tragseilen 210 verbunden sind, ermöglichen das Ein- und Ausdrehen des vorderen und des hinteren Flügelsegments 221, 223 auf der Umlaufbahn U um bevorzugt bis zu sieben Grad gegenüber der oben gezeigten symmetrischen Grundstellung des variablen Flügelprofils 22. Überblattungsstöße ermöglichen die Ausbildung von Haarfugen 226 an der Flügeloberfläche, die eine möglichst geringe Störung der laminaren Umströmung des variablen Flügelprofils 22 verursachen. Als asymmetrisches Flügelprofil 22 zeigt das variable Flügelprofil 22 den Querschnitt eines Clark YM15-Profils. Teilt man, wie in Fig. 3-5 gezeigt, die Umlaufbahn des variablen Rotorblatts 2 analog zu dem Zifferblatt einer Uhr in zwölf unterschiedliche Umlaufpositionen I-XII ein, ist das variable Flügelprofil 22 von IX Uhr bis III Uhr mit der Saugseite zur Außenseite der Umlaufbahn U orientiert, während das variable Flügelprofil 22 im luvseitigen Umlauf als asymmetrisches Flügelprofil 22 mit der Saugseite zu der Innenseite der Umlaufbahn U orientiert ist. Als Übergangsstellung weist das variable Flügelprofil 22 bei Position III und bei Position IX jeweils ein symmetrisches Flügelprofil 22 auf. Für das Ein- und Ausdrehen des vorderen und des hinteren Flügelsegments 221, 223 auf der Umlaufbahn U ist jeweils ein Paar einander auf der Umlaufbahn U gegenüberliegender Schläuche 224 vorgesehen, wobei durch Druckänderung der in den Schläuchen 224 eingeschlossenen Luft die Drehbewegung ausgelöst wird und die Flügelsegmente 221, 223 in der jeweiligen Betriebsstellung gehalten werden.

**Fig. 3** zeigt zwölf unterschiedliche Umlaufpositionen I-XII des variablen Flügelprofils 22 auf der durch den Radius r definierten kreisförmigen Umlaufbahn U. Bezogen auf die Windrichtung W ist die Saugseite des asymmetrischen Flügelprofils 22 im luvseitigen Umlauf zur Innenseite der Umlaufbahn U und im leeseitigen Umlauf zur Außenseite der Umlaufbahn U ausgerichtet, sodass das variable Flügelprofil 22 als Clark YM15-Profil bei Windstärken 3-6 eine durch Pfeile in Drehrichtung gekennzeichnete maximale tangentiale Antriebskraft bewirkt. An der Umlaufposition III und IX wechselt die Saugseite des variablen Flügelprofils 22 von der Außenseite auf die Innenseite der Umlaufbahn U, während an der Umlaufposition IX die Saugseite des variablen Flügelprofils 22 von der Innenseite auf die Außenseite der Umlaufbahn U wechselt und dabei jeweils die Grundstellung eines symmetrischen Flügelprofils 22 durchläuft. Im luv- und leeseitigen Umlauf bewirkt deshalb die resultierende Anströmung als Vektorsumme aus der Windgeschwindigkeit und der Umlaufgeschwindigkeit des Rotors R eine in Drehrichtung geneigte Auftriebskraft, die bei dem asymmetrischen Flügelprofil 22 etwa um ein Drittel größer ist als bei dem in Fig. 4 betrachteten symmetrischen Flügelprofil 22. Daraus folgt ein deutlich verbesserter Wirkungsgrad der Windkraftanlage 1 gegenüber einem herkömmlichen Darrieus-Rotor.

**Fig. 4** zeigt das variable Flügelprofil 22 nach Fig. 1-3 in zwölf Umlaufpositionen I-XII, die jeweils ein symmetrisches Flügelprofil aufweisen. Im Vergleich zu den in Fig. 3 dargestellten asymmetrischen Flügelstellungen bewirkt das variable Flügelprofil 22 als symmetrisches Flügelprofil 22 auf den Umlaufpositionen I-XII eine um etwa ein Drittel reduzierte Auftriebskraft und ist für die Windstärken 6-9 nach der Beaufort-Skala vorgesehen. Der reduzierte Auftrieb des symmetrischen Flügelprofils 22 führt zu einem geringeren Kippmoment an der Basis der Windkraftanlage 1 und reduziert die Schubbeanspruchung entsprechend.

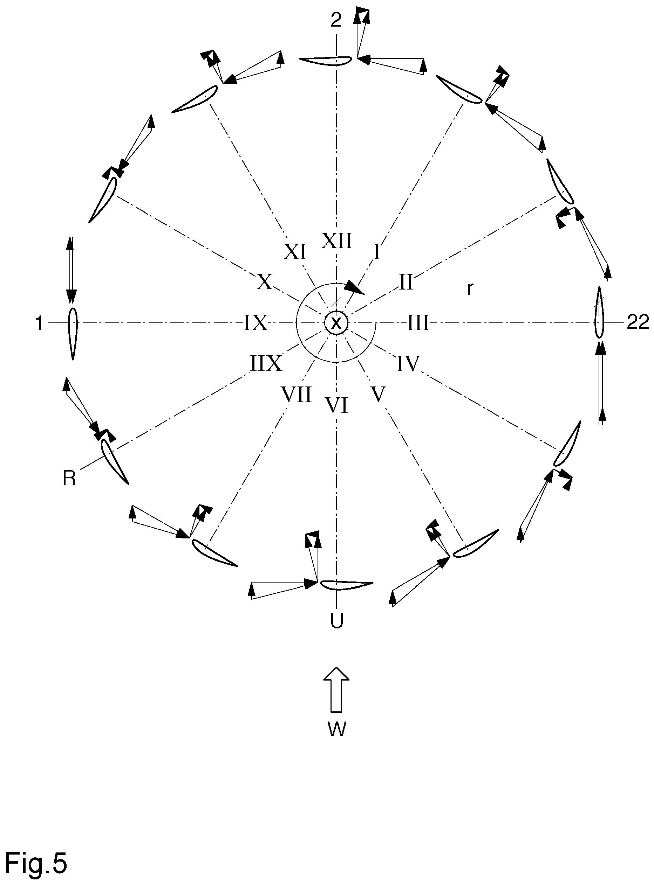

**Fig. 5** zeigt zwölf unterschiedliche Umlaufpositionen I-XII des variablen Flügelprofils 22 auf der durch den Radius r definierten kreisförmigen Umlaufbahn U des Rotors R. Bezogen auf die Windrichtung W ist die Saugseite des asymmetrischen Flügelprofils 22 im luvseitigen Umlauf zur Außenseite der Umlaufbahn U und ist im leeseitigen Umlauf zur Innenseite der Umlaufbahn U ausgerichtet, sodass das variable Flügelprofil 22 als Clark YM15-Profil mit Ausnahme der Umlaufpositionen III und IX bei extremen Windstärken 9-12 nach der Beaufort-Skala auf den Umlauf-Positionen V-VIII und X-I eine durch Pfeile in Drehrichtung gekennzeichnete minimale tangentiale Antriebskraft bewirkt, der auf den Umlauf-Positionen III, IV und IX ein entgegen der Drehrichtung wirkender tangentialer Widerstand entgegen steht. Da die tangentiale Antriebskraft überwiegt, dreht sich die Windkraftanlage 1 auch bei Orkan und selbst bei einem Hurrikane entsprechend der Safir-Simpson-Hurrikanskala und wandelt einen Teil der kinetischen Energie des Sturms in eine Drehbewegung um, was günstiger ist als ein Stillstand der Windkraftanlage 1.

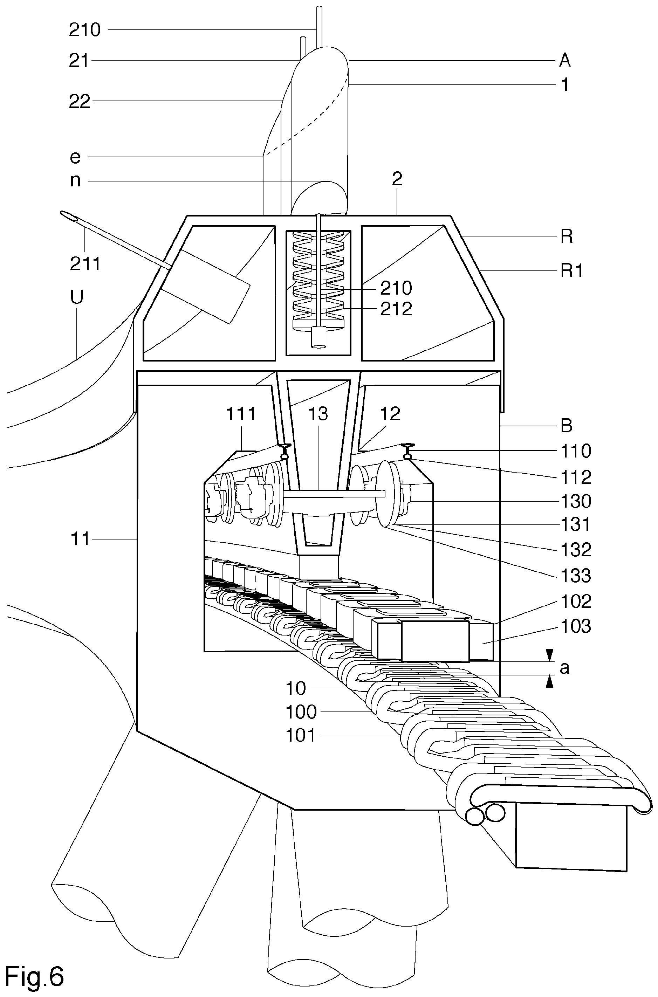

**Fig. 6** zeigt eine Abwicklungsperspektive des unteren Ringträgers R1 des Rotors R und des ringförmigen Hohlprofils 11 der Basis B mit dem Hinterschnitt 111. An einer dem unteren Ringträger R1 des Rotors R zugewandten oberen Öffnung des ringförmigen Hohlprofils 11 greift das Fahrwerk 13 des unteren Ringträgers R1 in das ringförmige Hohlprofil 11 derart ein, dass eine Kippsicherung 12 für den Rotor R zwischen den hängenden Schienen 112 des Gleises 110 und den Radsätzen 131 der Fahrgestelle 130 des Fahrwerks 13 gebildet wird. Die Räder 132 haben Spurkränze 133 und werden an den zueinander geneigten Fahrschultern der Schienen 112 geführt. Das untere Ende des Fahrwerks 13 trägt den Läufer 102 des Motorgenerators 10 und weist eine Erregerwicklung 103 auf. Der Stator 100 des Motorgenerators 10 besteht aus einem stählernen Fahrweg 101, der von einem Statorblechpaket mit einer dreiphasigen Paketwicklung gebildet wird. Diese Anordnung vergrößert im luvseitigen Umlauf des Rotors R die Vorspannkraft einer Reihe von Tellerfedern 212, die am unteren Ende der variablen Rotorblätter 2 die Tragseile 210 gegen den unteren Ringträger R1 vorspannen. Zwischen dem Läufer 102 und dem Stator 100 des Motorgenerators 10 ist ein Luftspalt a mit einem konstanten oder zumindest weitgehend konstanten Spaltmaß vorgesehen. Das ringförmige Hohlprofil 11 der Basis ist mittels von fachwerkartig angeordneten Pfählen mit dem in Fig. 1 dargestellten Fundament verbunden.

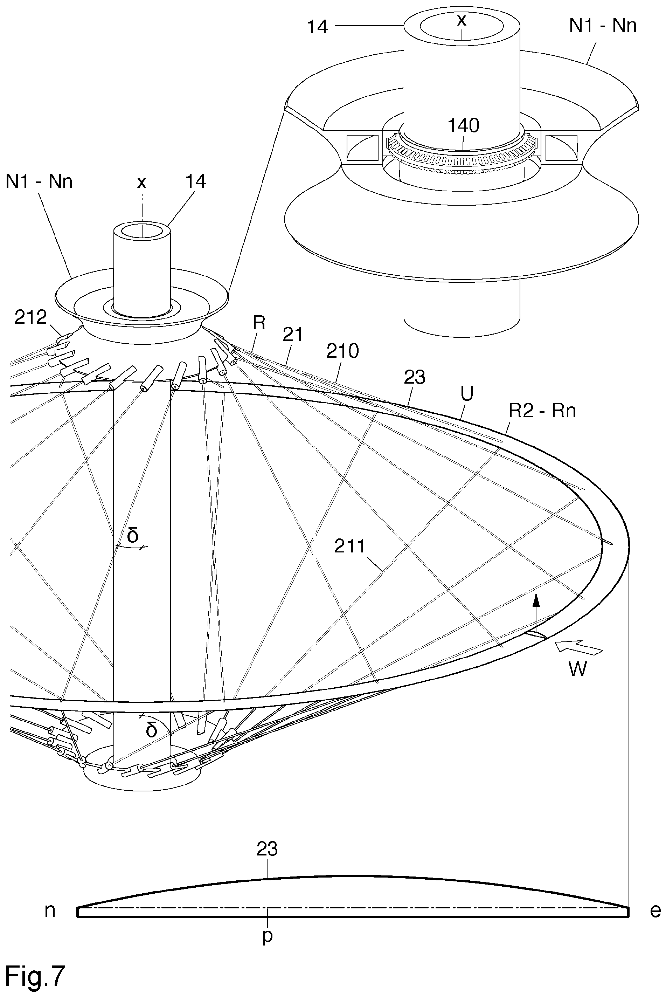

**Fig. 7** zeigt oben und in der Mitte zwei Längsabschnitte des koaxial und konzentrisch zu der vertikalen Rotationsachse x angeordneten, ortsfesten Masts 14 der Windkraftanlage 1 nach Fig. 1-6 sowie unten einen exemplarischen Querschnitt durch einen der oberen Ringträger R2-Rn. Die Ausschnittisometrie oben zeigt ein Kegelrollenlager 140, das im Bereich einer Queraussteifung des von einer Stahlbetonröhre gebildeten Masts 14 als Lager für die Naben N1-Nn angeordnet ist. Die Ausschnittisometrie in der Mitte zeigt die Verbindung des Masts 14 mit einer oberen und einer unteren Nabe N1-Nn und mit den oberen Ringträgern R2-Rn. Eine Vielzahl von Tragseilen 210 greift mit einem Versatzwinkel δ von oben an einen der oberen Ringträger R2-Rn an, während Spannseile 211, die mit der unteren Nabe N1-Nn verbunden sind, von unten an den oberen Ringträger R2-Rn angreifen. Die Trag- und Spannseile 210, 211 weisen bevorzugt jeweils einen gegensinnigen Versatzwinkel δ gegenüber dem Radius r des Ringträgers R2-Rn auf, sodass ein biege-, schub- und torsionssteifes Speichenrad für die Abspannung der hier nicht dargestellten mehrteiligen Rotorblätter gebildet wird. Die oberen Ringträger R1-R2 weisen bevorzugt im Querschnitt ein aerodynamisch wirksames Ringflügelprofil auf. Unabhängig von der jeweiligen Windrichtung W erzeugt der Ringflügel 23 im luvseitigen und im leeseitigen Umlauf des Rotors R Auftrieb, der sich entlastend auf die globale Vertikallast der Windkraftanlage 1 auswirkt. Dabei geht die Umlaufgeschwindigkeit des Rotors R in die resultierende Anströmung der oberen Ringträger R1-R2 mit ein, sodass der Ringflügel 23 diagonal überströmt wird und deshalb eine sehr große Flügeloberfläche aufweist.

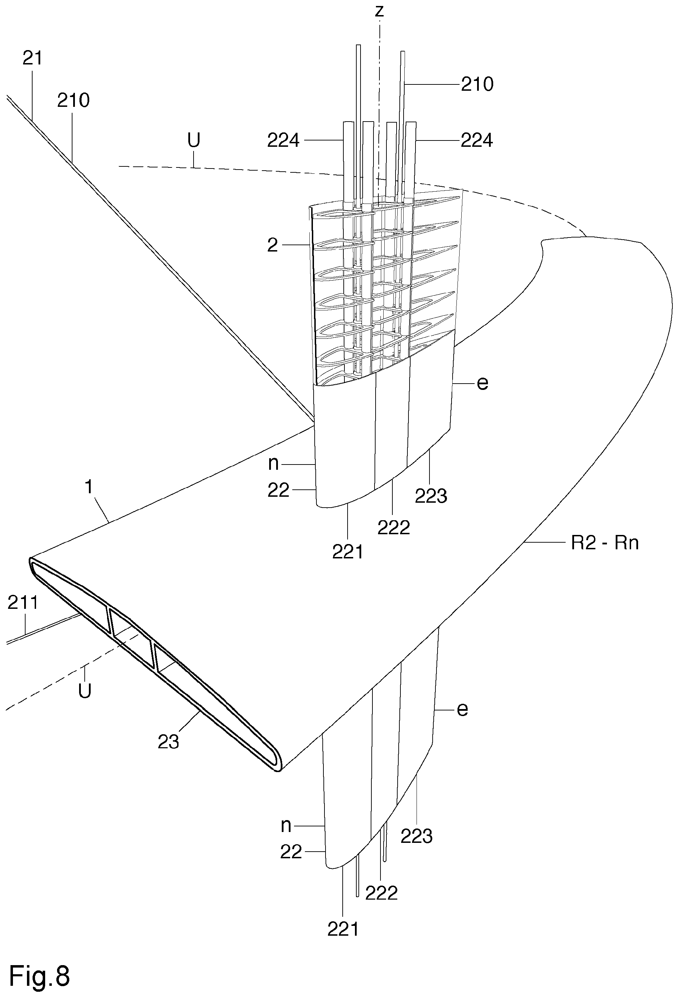

**Fig. 8** zeigt den Anschluss des variablen Flügelprofils 22 der Windkraftanlage 1 nach Fig. 1-7 an einen oberen Ringträger R1-Rn. Das mittlere Flügelsegment 222 des variablen Flügelprofils 22 ist bevorzugt mit nicht näher dargestellten Seilklemmen kraftschlüssig mit integrierten Tragseilen 210 verbunden, während das vordere Flügelsegment 221 und das hintere Flügelsegment 223, wie in Fig. 2 dargestellt, mittels eines Scharniers 220 an das mittlere Flügelsegment 222 angelenkt sind. An diesem Knotenpunkt des Seiltragwerks 21 greifen Tragseile 210 von oben und Spannseile 211 von unten an einen Ringträger R1-Rn an, sodass, wie in Fig. 7 gezeigt, ein biege- und torsionssteifes Speichenrad für die Aufhängung der in der symmetrischen Grundstellung tangential zu der Umlaufbahn U ausgerichteten variablen Rotorblätter 2 gebildet wird.

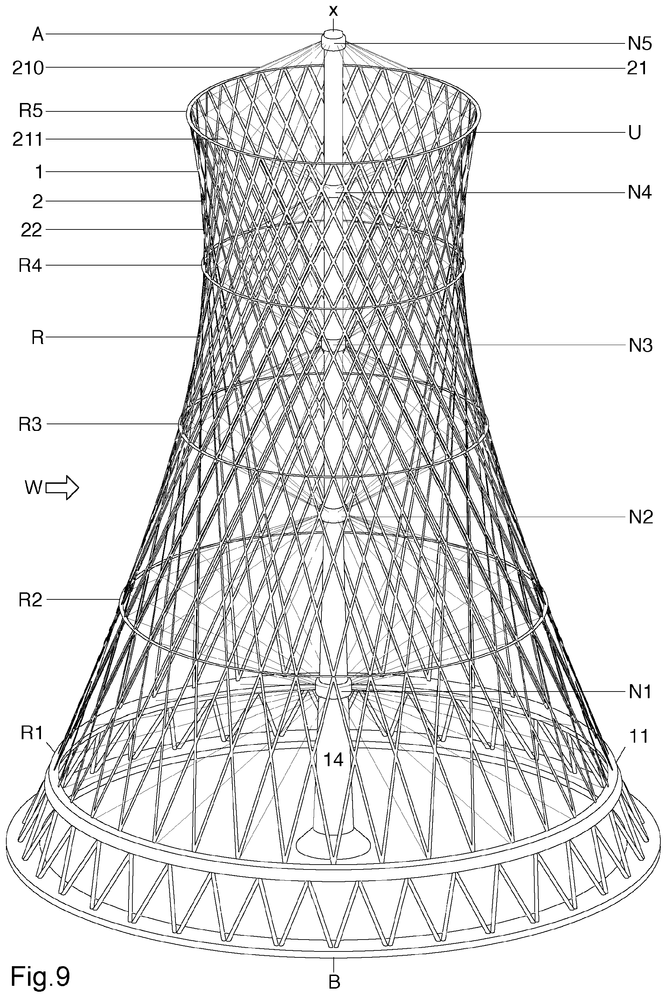

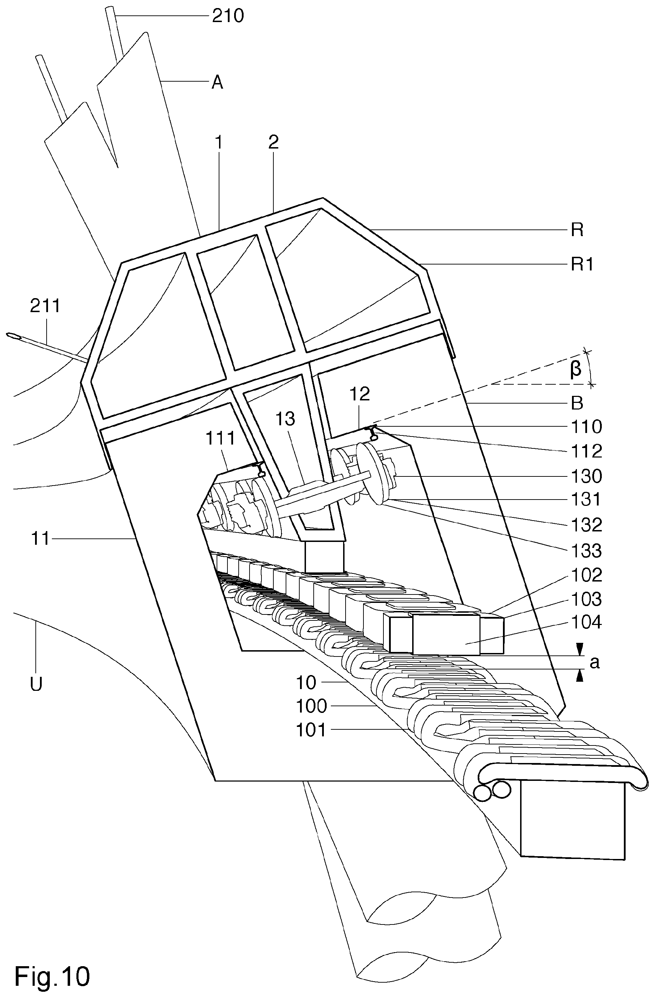

**Fig. 9** zeigt eine Windkraftanlage 1 mit einem konzentrisch und koaxial zu der Rotationsachse x ausgebildeten Mast 14 und einem Tragwerk A. Das Tragwerk A ist als ein von dem Mast 14 abgespanntes Seiltragwerk 21 ausgebildet. Insgesamt fünf Naben N1-N5 sind, wie in Fig. 7 gezeigt, mittels von Kegelrollenlagern 140 an Queraussteifungen des als Stahlbetonröhre ausgebildeten Masts 14 gelagert. Die Naben N1-N7 sind mittels von Tragseilen 210 und Spannseilen 211 mit Ringträgern R1-R5 verbunden, welche die Umlaufbahn U des sich zu dem unteren Ringträger R1 hin auf einer hyperbolischen Kurve erweiternden Rotors R definieren. Während die Tragseile 210 mit den Ringträgern R1-R5 von oben nach unten verlaufen, weisen die Spannseile 211 jeweils einen Verlauf von unten nach oben auf. Die ortsfeste Basis B der Windkraftanlage 1 zeigt ein von Pfählen gebildetes Fachwerk, dessen Obergurt von dem ringförmigen Hohlprofil 11 gebildet wird. Das zugbeanspruchte Tragwerk A des Rotors R ermöglicht die Ausbildung einer sehr großen und hohen Windkraftanlage 1, die mit einer Höhe von bis zu 1.000 m gebaut werden kann. Im Inneren des als schlanke Stahlbetonröhre ausgebildeten Masts 14 sind Aufzüge, Treppen und Versorgungsleitungen untergebracht, sodass eine Montage des modular aufgebauten Tragwerks A ermöglicht wird. Das als Rotationshyperboloid ausgebildete Seiltragwerk 21 des Rotors R mit rautenförmigen und dreieckigen Maschen wird durch vier torsionssteif ausgebildete Speichenräder mittels der Ringträger R1-R5 ausgesteift. Wie in Fig. 10 dargestellt, ist der Fahrweg 101 des Motorgenerators 10 in das ringförmige Hohlprofil 11 der Basis A integriert, während das Fahrwerk 13 mit dem unteren Ringträger R1 verbunden ist. Die Verbreiterung des Rotationshyperboloids an der Basis A erhöht die Stabilität der Windkraftanlage 1.

**Fig. 10** zeigt die Windkraftanlage 1 nach Fig. 9 mit dem Detail des Hinterschnitts 111 zwischen dem unteren Ringträger R1 des Rotors R und dem ringförmigen Hohlprofil 11 der Basis B. An einer dem unteren Ringträger R1 des Rotors R zugewandten oberen Öffnung des ringförmigen Hohlprofils 11 greift das mit dem unteren Ringträger R1 verbundene Fahrwerk 13 des Motorgenerators 10 derart in das ringförmige Hohlprofil 11 ein, dass der Hinterschnitt 111 zwischen dem von hängenden Schienen 112 gebildeten Gleis 110 und dem von Fahrgestellen 130 mit Radsätzen 131 für Räder 132 gebildeten Fahrwerk 13 des Rotors R die Kippsicherung 12 des Rotors R bildet. Das Gleis 110 ist mit einem Neigungswinkel β gegenüber der Horizontalen geneigt, wobei die Räder 132 mit Spurkränzen 133 an den zueinander geneigten Fahrschultern der Schienen 112 geführt werden. Das untere Ende des Fahrwerks 13 trägt den Läufer 102 des Motorgenerators 10 und weist eine Erregerwicklung 103 aus Kupfer für Eisenkerne auf. Alternativ kann der Läufer 102 mit Permanentmagneten 104 bestückt werden. Der Stator 100 des Motorgenerators 10 ist als ein kreisringförmiger stählerner Fahrweg 101 mit einem Statorblechpaket und einer bevorzugt dreiphasigen Paketwicklung ausgebildet. Der Fußpunkt des Rotationshyperboloids ist, wie in Fig. 9 gezeigt, an der Basis B stark erweitert, sodass die Kippsicherheit der Windkraftanlage 1 erhöht wird. Die Neigung des Gleises 110 mit dem Neigungswinkel β verläuft bevorzugt senkrecht zu der Tragrichtung der Tragseile 210. Zwischen dem Läufer 102 und dem Stator 100 des Motorgenerators 10 kann deshalb im Betrieb der Windkraftanlage 1 ein Luftspalt a mit einem konstanten Spaltmaß realisiert werden. Fachwerkartig angeordnete Pfähle des Fundaments der Basis B folgen der erzeugenden Kurve des Rotationshyperboloids, sodass die aus der Zug-, Druck- und Schubbeanspruchung der Windkraftanlage 1 resultierenden Kräfte direkt in einen tragfähigen Baugrund eingeleitet werden können.

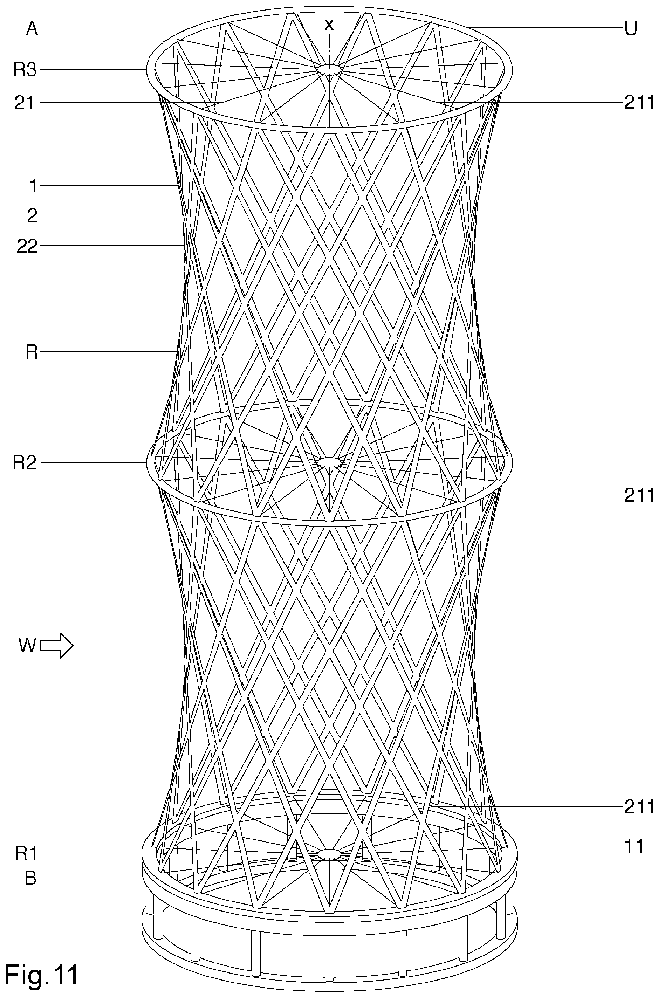

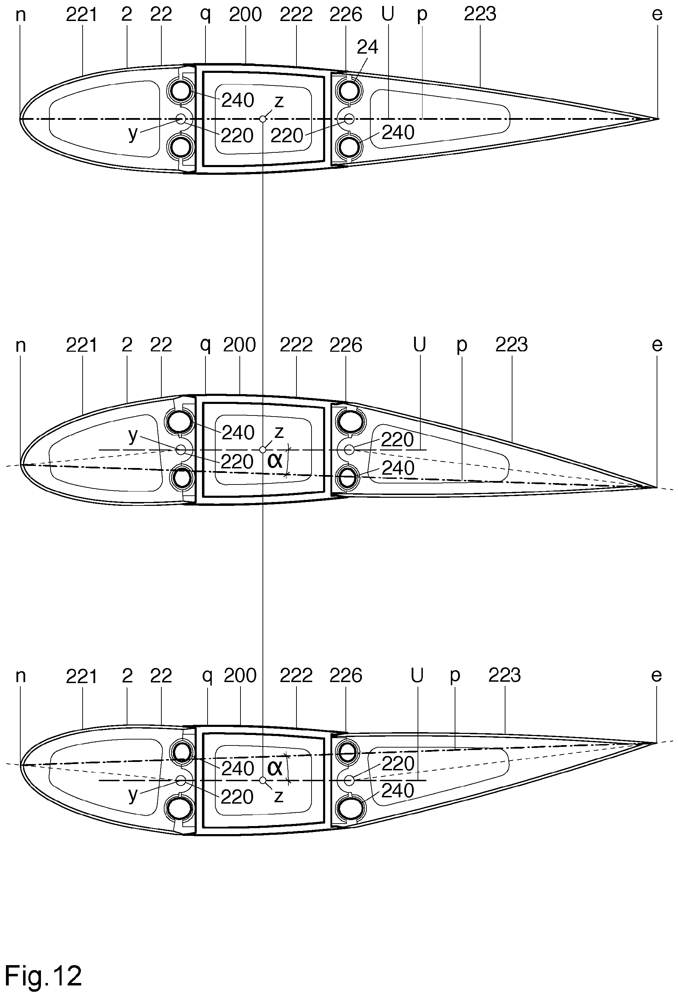

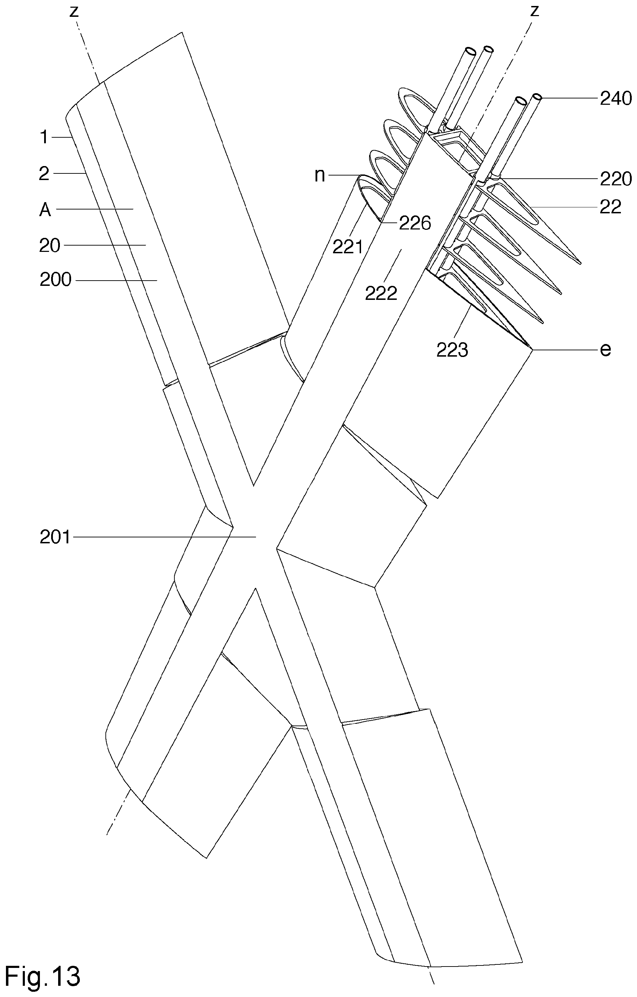

**Fig. 11** zeigt eine Windkraftanlage 1, deren Tragwerk A als eine selbsttragende Gitterschale 20 ausgebildet ist, in der isometrischen Übersicht. Die Rotorblätter R weisen, wie in Fig. 12 gezeigt, ein dreiteiliges variables Flügelprofil 22 auf, wobei das mittlere Flügelsegment 222 als kastenförmiges Tragprofil 200 das Tragwerk A der Windkraftanlage 1 bildet, die sich über eine Höhe h zwischen einem unteren Ringträger R1 und zwei oberen Ringträgern R2, R3 erstreckt. Die Ringträger R1-R3 sind jeweils mittels radialer Spannseile 211 ausgesteift. Die kastenförmigen Tragprofile 200 der Gitterschale 20 sind, wie in Fig. 13 gezeigt, an Knotenpunkten 201 untereinander verbunden und weisen eine gerade Längsachse z auf. Der Rotor R der Windkraftanlage 1 besteht aus zwei übereinander gestapelten Modulen jeweils in Form eines Rotationshyperboloids. Rotorblätter 2 als integraler Bestandteil des Tragwerks A, die an den Knotenpunkten 201 zu einer Gitterschale 20 mit rautenförmigen und dreieckigen Feldern verbunden sind, ermöglichen durch eine Verschmelzung des Tragwerks A mit den Rotorblättern 2 eine radikale Vereinfachung des strukturellen Aufbaus der Windkraftanlage 1. Wie in Fig. 10 gezeigt, weist der Hinterschnitt 111 zwischen dem ringförmigen Hohlprofil 11 der Basis B und dem unteren Ringträger R1 des Rotors R eine aktive Kippsicherung 12 auf, sodass die Windkraftanlage 1 mit den variablen Flügelprofilen 22 von Windstärke 4-12 und darüber hinaus betrieben werden kann.

**Fig. 12** zeigt das dreiteilig bzw. dreisegmentig ausgebildete, variable Flügelprofil 22 der Rotorblätter R der Windkraftanlage 1 nach Fig. 11 in drei unterschiedlichen Flügelstellungen: Oben als symmetrisch ausgebildetes Flügelprofil 22, dessen Profilsehne p als Tangente zu der Umlaufbahn U einen rechten Winkel zu dem Radius r der Umlaufbahn aufweist, in der Mitte als asymmetrisch ausgebildetes Flügelprofil 22 mit einem positiven Anstellwinkel α der Profilsehne p gegenüber der Außenseite der Umlaufbahn U und unten als asymmetrisch ausgebildetes Flügelprofil 22 mit einem positiven Anstellwinkel α der Profilsehne p gegenüber der Innenseite der Umlaufbahn U. Das mittlere Flügelsegment 222 ist im Bereich der maximalen Profildicke q als ein kastenförmiges Tragprofil 200 ausgebildet, dessen auf der Umlaufbahn U einander gegenüberliegenden Flansche den ortsfesten mittleren Abschnitt der Flügeloberfläche bilden. Das vordere und des hintere Flügelsegment 221, 223 sind mittels von Scharnieren 220 an das Tragprofil 200 angelenkt und ermöglichen das Aus- und Eindrehen des vorderen und hinteren Flügelsegments 221, 223 auf der Umlaufbahn U jeweils um bevorzugt bis zu sieben Grad gegenüber der oben gezeigten symmetrischen Grundstellung des variablen Flügelprofils 22. Die Haarfugen 226 der Überblattungsstöße stören die laminare Umströmung des variablen Flügelprofils 22 in Form eines Clark YM15-Profils möglichst wenig. Aus Fig. 3-5 geht die aerodynamische Wirkung der unterschiedlichen Flügelstellungen auf der beispielhaft in zwölf unterschiedliche Umlaufpositionen I-XII eingeteilten Umlaufbahn U hervor.

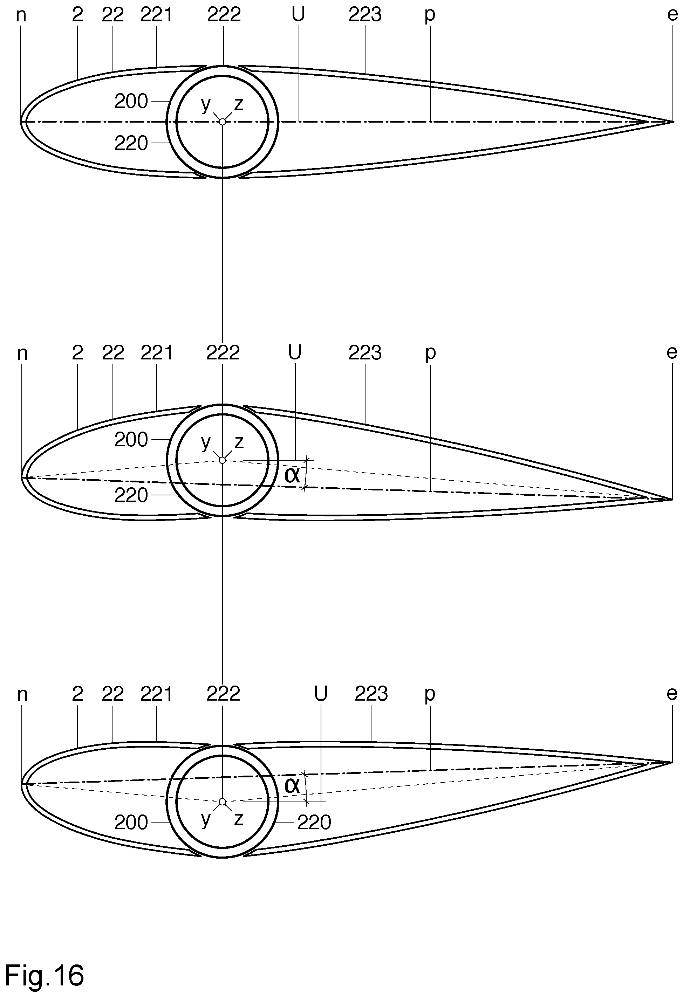

**Fig. 13** zeigt die Windkraftanlage 1 nach Fig. 11-12 mit einem Knotenpunkt 201 der selbsttragenden Gitterschale 20. Wie in Fig. 12 gezeigt, ist das mittlere Flügelsegment 222 als ein kastenförmiges Tragprofil 200 der selbsttragenden Gitterschale 20 ausgebildet. An dem Knotenpunkt 201 sind vier kastenförmige Tragprofile 200 kraftschlüssig miteinander verbunden. Wie auch in Fig. 12 gezeigt, sind das vordere Flügelsegment 221 und das hintere Flügelsegment 223 mittels von Scharnieren 220 mit Drehachsen y (vgl. Fig. 16) an das mittlere Flügelsegment 222 angelenkt, wobei dehnbare Schläuche 224 dazu ausgebildet sind, das vordere Flügelsegment 221 und das hintere Flügelsegment 223 derart zu drehen, dass das variable Flügelprofil 22 aus einer symmetrischen Flügelstellung in asymmetrische Flügelstellungen gedreht und in der jeweiligen Flügelstellung arretiert werden kann. Dies geschieht allein durch eine durch einen Kompressor unterstützte Umverteilung der in den Schläuchen 224 gespeicherten Druckluft. Wie bereits in Fig. 2 erläutert, bewirkt das Ein- und Ausdrehen der vorderen und hinteren Flügelsegmente 221, 223 auf der Umlaufbahn U jeweils einen positiven Anstellwinkel α des variablen Flügelprofils 22 in Bezug zu einer tangentialen Grundstellung der Profilsehne p des mittleren Flügelsegments 222, sodass, wie in Fig. 3 gezeigt, die Saugseite des variablen Flügelprofils 22 vom luvseitigen Umlauf zum leeseitigen Umlauf die Orientierung von der Innenseite zur Außenseite der Umlaufbahn U wechselt.

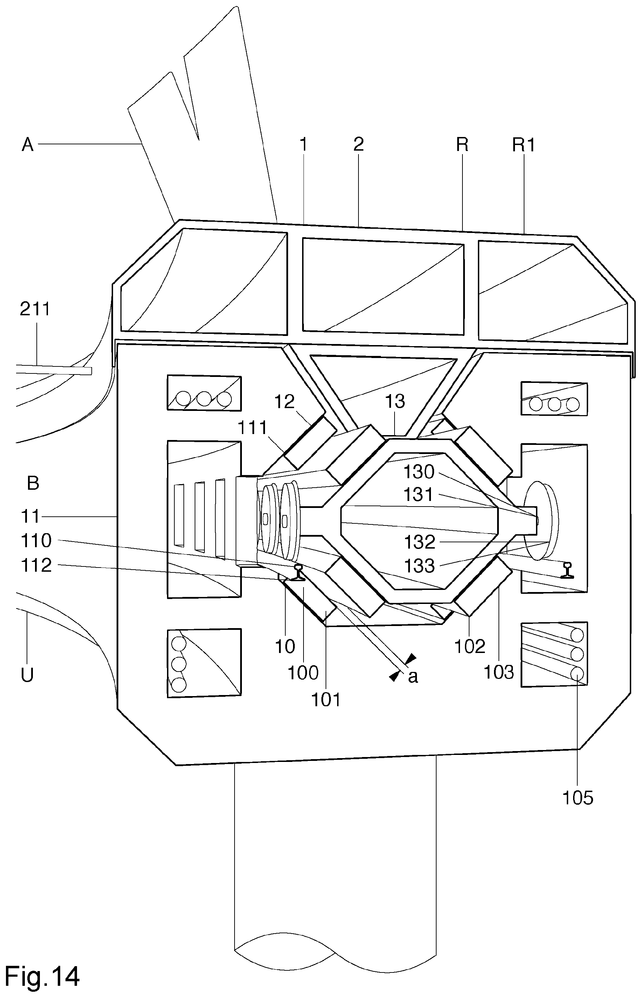

**Fig. 14** zeigt die Windkraftanlage 1 nach Fig. 11-13 mit dem Detail der Verbindung zwischen dem unteren Ringträger R1 des Rotors R und dem ringförmigen nach oben offenen Hohlprofil 11, das vier Motorgeneratoren 10 aufnimmt, die jeweils diagonal zueinander versetzt auf einem polygonalen Hohlprofil des Fahrwerks 13 angeordnet sind. Die beiden unteren Motorgeneratoren 10 ziehen den Rotor 2 im Betrieb der Windkraftanlage 1 an die Basis B heran und die beiden oberen Motorgeneratoren 10 stoßen den Rotor R von der Basis B ab. Diese Anordnung ermöglicht eine aktive Kippsicherung 12 in Übereinstimmung mit der jeweiligen Windrichtung. Die Einteilung der ringförmigen Motorgeneratoren 10 in eine Mehrzahl radialer Sektoren ermöglicht eine an die jeweilige Windrichtung angepasste Schaltung dieser Form eines Ringgenerators, sodass im luvseitigen Umlauf des Rotors 2 die beiden unteren Motorgeneratoren 10 Strom erzeugen und im leeseitigen Umlauf des Rotors R die beiden oberen Motorgeneratoren 10 Strom erzeugen, wobei von dem Fahrwerk 13 mit Rädern 133 lediglich Differenzkräfte auf das Gleis 110 übertragen werden müssen. Das ringförmige Hohlprofil 11 der Basis B ist als ein Hohlkammerprofil ausgebildet und weist seitliche Wartungsgänge für die Motorgeneratoren 10 und das Fahrwerk 13 sowie vier Kanäle für Kabel 105 auf und ist mit der Basis B mittels von Pfählen mit dem in Fig. 11 dargestellten Fundament verbunden.

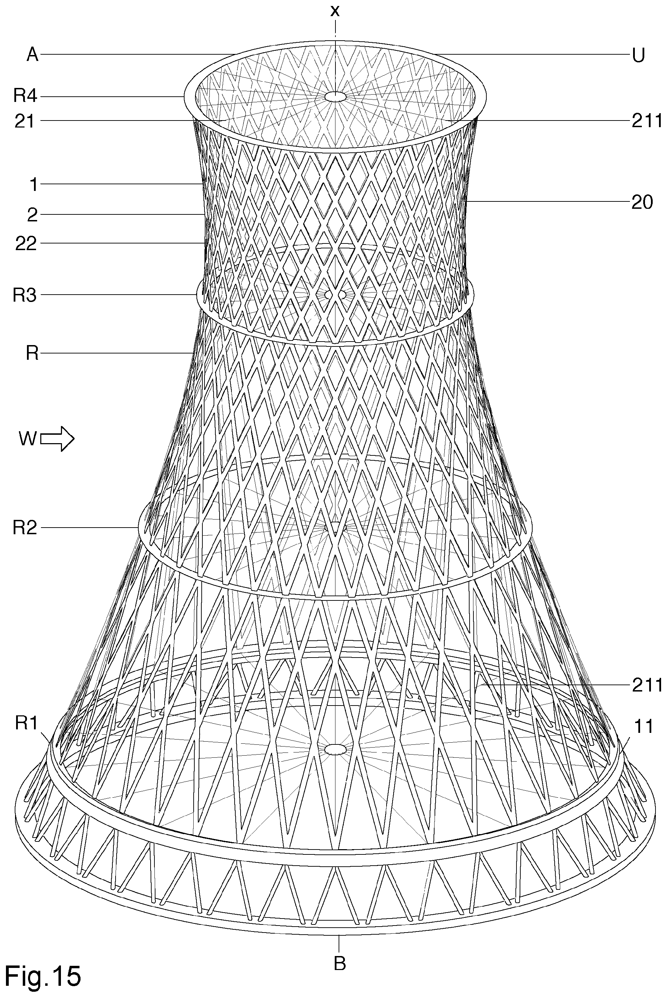

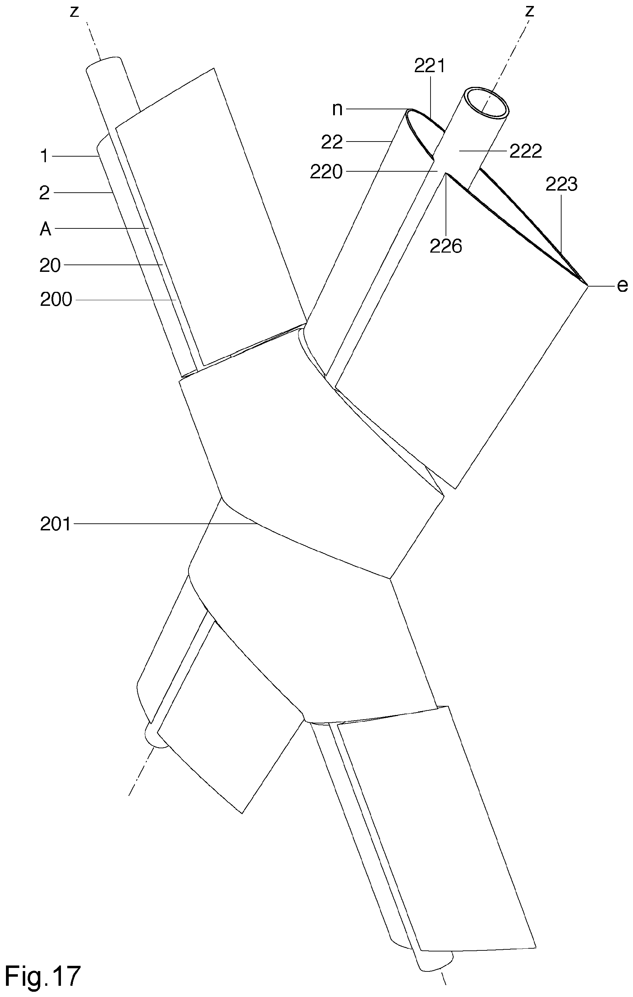

**Fig. 15** zeigt eine Windkraftanlage 1, deren Rotor R als eine selbsttragende Gitterschale 20 in Form eines sich zu dem unteren Ringträger R1 hin erweiternden Rotationshyperboloids ausgebildet ist. Die ortsfeste Basis B der Windkraftanlage 1 zeigt ein von Pfählen gebildetes Fachwerk, dessen Obergurt von dem ringförmigen Hohlprofil 11 der Basis B und dessen Untergurt von einem ringförmig ausgebildeten Fundament gebildet wird. Als zug-, druck- und biegesteifes Schalentragwerk ermöglicht die Gitterschale 20 den Bau sehr großer Windkraftanlagen 1 mit einer Höhe von etwa sechshundert Metern, die an der Basis einen Durchmesser von zweihundert bis dreihundert Metern aufweisen. Vier Ringträger R1-R4 steifen die selbsttragende Gitterschale 20 aus und sind ihrerseits mit radial verlaufenden Spannseilen 211 ausgesteift. Die Gitterschale 20 weist dreieckige und rautenförmige Felder auf, die, wie in Fig. 16 gezeigt, von variablen Flügelprofilen 22 gebildet werden. Wie in Fig. 17 gezeigt, ist die Gitterschale 20 als eine Rohrkonstruktion mit Knotenpunkten 201 ausgebildet, deren Tragprofile 200 aus Rundhohlprofilen bestehen, die das mittlere Flügelsegment 222 bilden, sodass die Längsachsen der Rundhohlprofile mit den Längsachsen z der Rotorblätter 2 identisch sind. Die Verbreiterung des Rotationshyperboloids an der Basis A erhöht die Stabilität der Windkraftanlage 1.

**Fig. 16** zeigt das Rotorblatt 2 der Windkraftanlage 1 nach Fig. 15 mit einem dreiteilig bzw. dreisegmentig ausgebildeten, variablen Flügelprofil 22 in drei unterschiedlichen Blattstellungen: Oben als symmetrisch ausgebildetes Flügelprofil 22, dessen Profilsehne p als Tangente zu der Umlaufbahn U einen rechten Winkel zu dem Radius r der Umlaufbahn aufweist, in der Mitte als asymmetrisch ausgebildetes Flügelprofil 22 mit einem positiven Anstellwinkel α der Profilsehne p gegenüber der Außenseite der Umlaufbahn U und unten als asymmetrisch ausgebildetes Flügelprofil 22 mit einem positiven Anstellwinkel α der Profilsehne p gegenüber der Innenseite der Umlaufbahn U. Das mittlere Flügelsegment 222 im Bereich der maximalen Profildicke q weist ein als Tragprofil 200 ausgebildetes Rundhohlprofil auf, dessen auf der Umlaufbahn U einander gegenüberliegenden Außenoberflächen einen ortsfesten mittleren Abschnitt der Flügeloberfläche bilden. Das vordere und des hintere Flügelsegment 221, 223 sind mittels eines nicht näher dargestellten Drehgelenks mit der Drehachse y an das Rundhohlprofil angelenkt und ermöglichen das Aus- und Eindrehen des vorderen und hinteren Flügelsegments 221, 223 auf der Umlaufbahn U jeweils um bevorzugt bis zu 7 Grad gegenüber der oben gezeigten symmetrischen Grundstellung des variablen Flügelprofils 22. Der formschlüssige Anschluss des vorderen und des hinteren Flügelsegments 221, 223 an das Rundhohlprofil begünstigen die laminare Umströmung des variablen Flügelprofils 22, das als asymmetrisches Flügelprofil bevorzugt die Form eines Clark YM15-Profils aufweist. Aus Fig. 3-5 geht die aerodynamische Wirkung der unterschiedlichen Flügelstellungen auf der beispielhaft in zwölf unterschiedliche Umlaufpositionen I-XII eingeteilten Umlaufbahn U hervor.

**Fig. 17** zeigt die Windkraftanlage 1 nach Fig. 15-16 mit einem Knotenpunkt 201 der selbsttragenden Gitterschale 20. Wie in Fig. 16 gezeigt, weist das Tragprofil 200 der Gitterschale 20 ein Rundhohlprofil auf und bildet das mittlere Flügelsegment 222 des dreiteilig aufgebauten variablen Flügelprofils 22 eines Rotorblatts 2. An dem Knotenpunkt 201 sind vier Rundhohlprofile kraftschlüssig miteinander verbunden. Wie in Fig. 16 gezeigt, sind das vordere Flügelsegment 221 und das hintere Flügelsegment 223 mittels nicht näher dargestellter Drehgelenke mit Drehachsen y an das Tragprofil 200 angelenkt. Bei dem Drehen des vorderen und des hinteren Flügelsegments 221, 223 bildet die Außenoberfläche des Rundhohlprofils die ortsfeste Flügeloberfläche eines mittleren Flügelsegments 222 an die die Flügeloberflächen des vorderen und des hinteren Flügelsegments 221, 223 nahtlos anschließen.

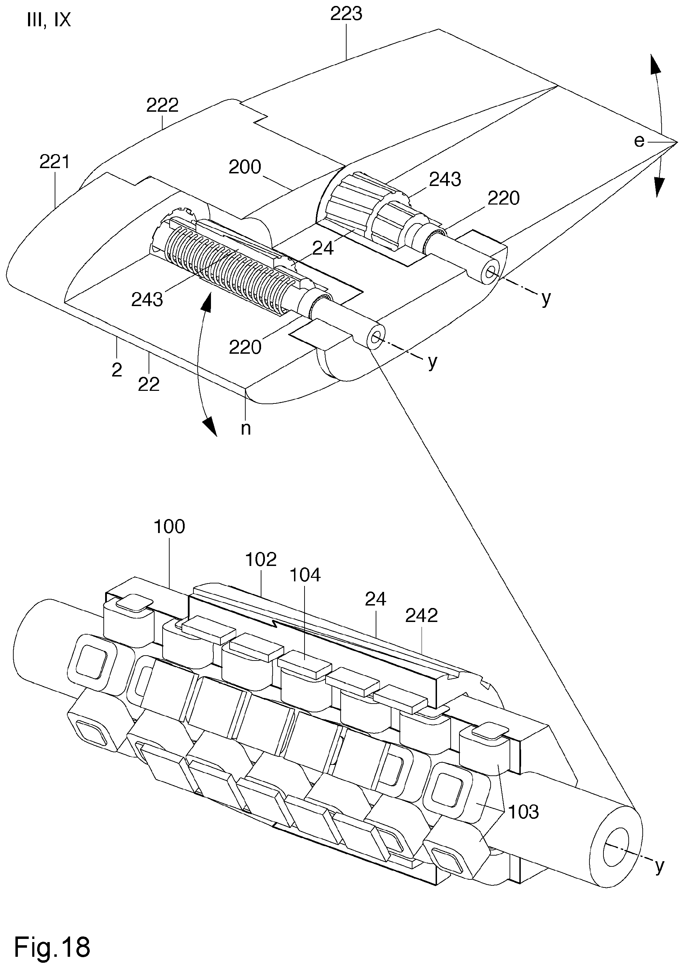

**Fig. 18** zeigt einen elektromagnetischen Aktor 24 als Rotorblattverstellung, exemplarisch für einen Längsabschnitt des Rotorblatts 2, oben an einer Stellposition der Umlaufbahn U mit dem variablen symmetrischen Flügelprofil 22. Die Scharniere 220 sind jeweils konzentrisch und koaxial zu den Drehachsen y für das vordere Blattsegment 221 und das hintere Blattsegment 223 angeordnet und dienen als Kabelkanäle für die Stromversorgung der beiden jeweils von einem Schieber gebildeten Aktoren 24. Bei der oben dargestellten einfachen Ausführung bildet eine Eisenhülse oder ein radiales Blechpaket des Scharniers 220 den Stator 100 mit einer Erregerwicklung 103 für den von einem Schieber gebildeten Läufer 102. Durch Umpolung der Erregerwicklung 103 an der Eisenhülse bzw. an dem radialen Blechpaket des Scharniers 220 führt der Schieber eine oszillierende Bewegung mit einer Frequenz von 20-30 Hz auf einem hohlen Scharnierbolzen aus, wobei Gewindeabschnitte 243 des Läufers 102 mit Gewindeabschnitten 243 des vorderen und hinteren Blattsegments 221, 223 ineinandergreifen und die Drehbewegung mit gegensinniger Drehrichtung an dem vorderen und hinteren Blattsegment 221, 223, bewirken. Luftlager zwischen den Gewindeabschnitten 243 der Scharniere 220 sowie zwischen dem Läufer 102 und dem Stator 100 halten die Reibungskräfte gering und werden durch die hohlen Scharniere 220 mit Druckluft versorgt. Bei diesem Ausführungsbeispiel ist das elektromagnetisch induzierte Feld parallel zu den Drehachsen y ausgerichtet, während bei dem unten dargestellten linearen Schrittmotor 242 eine Vielzahl von Erregerwicklungen 103 des Stators 100 jeweils radial zu den Drehachsen y der Blattsegmente 221, 223 ausgerichtet sind, und der konzentrisch und koaxial zu den Scharnieren 220 angeordnete Läufer 102 eine Vielzahl korrespondierender Permanentmagnete 104 aufweist. Der lineare Schrittmotor 242 erlaubt eine exakte Positionierung des als Läufer 102 ausgebildeten Schiebers, sodass der Anstellwinkel α für das vordere und das hintere Blattsegment 221, 223 sehr exakt eingestellt und variiert werden kann. Der Aktor (Aktuator) 24 ist dazu ausgebildet, beträchtliche aerodynamisch bewirkte Sogkräfte sowie Zentrifugalkräfte aufzunehmen, wobei die Flügelsegmente 221, 223 in jedem Längsabschnitt des Rotorblatts 2 individuell verstellbar und arretierbar sind.

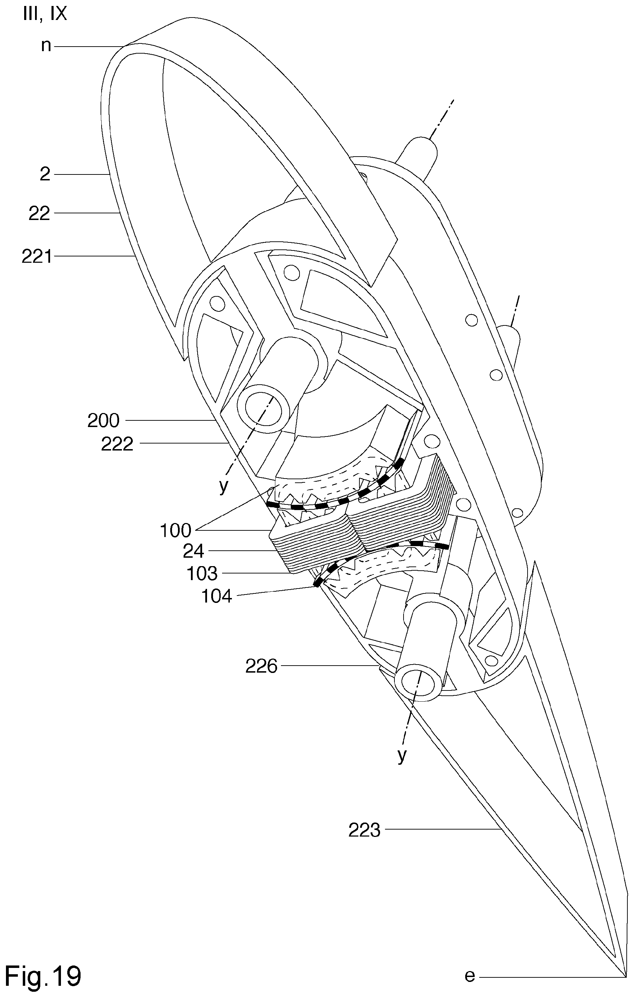

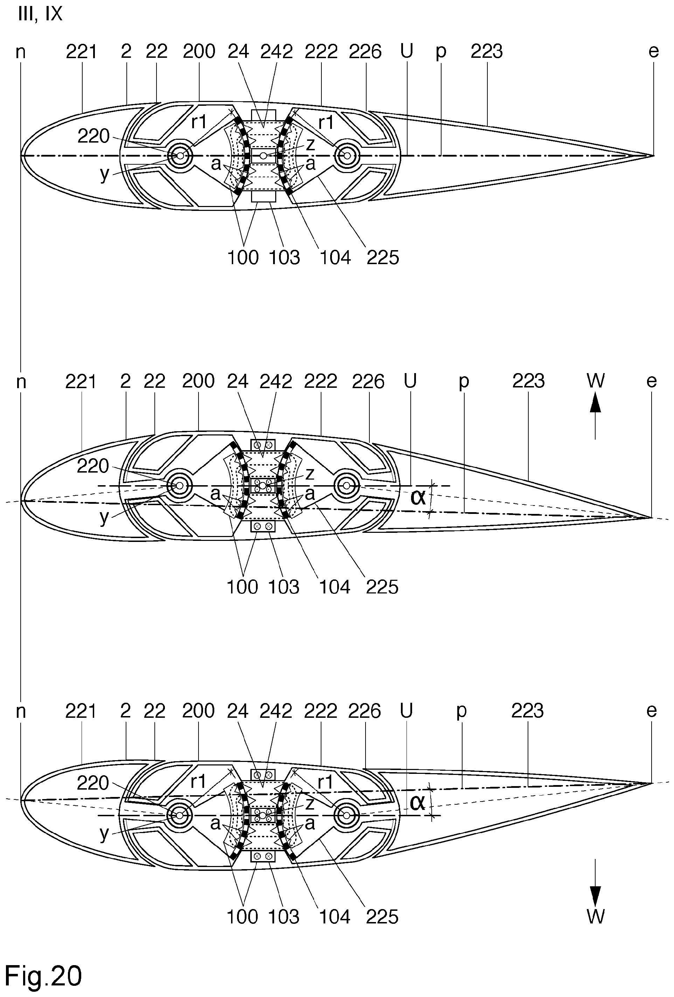

**Fig. 19** zeigt das dreiteilige bzw. dreigliedrige Rotorblatt 2 in einem perspektivischen Ausschnitt mit Darstellung eines doppelseitig wirksamen Aktors 24 der Rotorblattverstellung, der einen von zwei Blechpaketen mit gegensinnigen Erregerwicklungen 103 gebildeten Stator 100 und zwei mit dem vorderen und hinteren Flügelsegment 221, 223 verbundene Läufer 103 aufweist, die in den Drehachsen y an das mittlere von einem Aluminiumstrang-Pressprofil gebildete Flügelsegment 222 angelenkt sind. Die Läufer 102 sind mit Hebelarmen 224 des vorderen und dem hinteren Flügelsegments 221, 223 verbunden und weisen alternierend gepolte Permanentmagnete 104 auf. Beidseitige Luftspalte a zwischen den Hebelarmen 224 mit den Permanentmagneten 104 der Läufer 102 und dem Stator 100 des mittleren Flügelsegments 222 ermöglichen eine berührungslose elektrische Verbindung zwischen dem mittleren Flügelsegment 222 und dem vorderen und dem hinteren Flügelsegment 221, 223. Wie auch in Fig. 20 gezeigt, wird durch Umpolung der Erregerwicklung 103 der beiden Blechpakete des Stators 100 das simultane und gegensinnige Ein- und Ausdrehen des vorderen und hinteren Flügelsegments 221, 223 ermöglicht. Die Gegengewichte 225 an dem vorderen und dem hinteren Flügelsegment 221, 223 sind so austariert, dass bei der Rotation keine Fliehkräfte entstehen und der Aktuator 24 für die Verstellkräfte an den Umlaufpositionen III, IX der Umlaufbahn U, wie in Fig. 3-5 gezeigt, ausgelegt wird.

**Fig. 20** zeigt drei unterschiedliche Flügelstellungen des variablen Flügelprofils 22 des dreiteiligen Rotorblatts 2 nach Fig. 19, wie in Fig. 3-5 dargestellt, an den Umlaufposition III, IX der in zwölf exemplarische Umlaufpositionen I-XII unterteilten Umlaufbahn U, oben mit einem symmetrisches Flügelprofil 22 und in der Mitte und unten mit einem asymmetrischen Flügelprofil 22. Hebelarme des vorderen und des hinteren Flügelsegments 221, 223 sind jeweils mit einem Radius r1 an den Drehachsen y des mittleren Flügelsegments 222 angelenkt und bilden ein Gegengewicht 225, sodass sich Fliehkräfte an den Flügelsegmenten 221, 223 gegenseitig kompensieren. Durch die Blattverstellung der vorderen und hinteren Flügelsegmente 221, 223 jeweils um bevorzugt 6,5 bzw. 5,5 Grad, mittels des radialen Schrittmotors 242, erhält die Profilsehne p einen positiven Anstellwinkel α von zwei Grad.

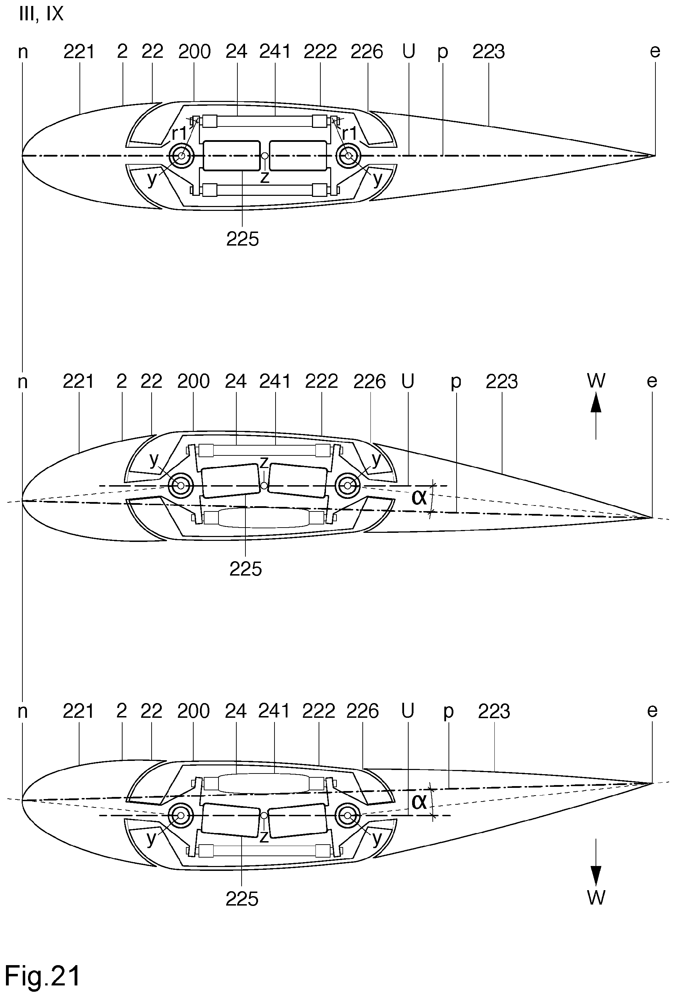

**Fig. 21** zeigt drei schematische Querschnitte des dreiteiligen bzw. dreigliedrigen Rotorblatts 2, bei dem das variable Flügelprofil 22, wie in Fig. 3-5 gezeigt, an der oben dargestellten Umlaufposition III, IX der exemplarisch in zwölf Umlaufpositionen I-XII unterteilten Umlaufbahn U jeweils ein symmetrisches Flügelprofil 22 und im luvseitigen und leeseitigen Umlauf jeweils ein asymmetrisches Flügelprofil 22 aufweist, dessen Saugseite in Windrichtung W ausgerichtet ist. Das variable Flügelprofil 22 der Windkraftanlage 1 weist jeweils an den Stellpositionen der Umlaufbahn U temporär ein symmetrisches Flügelprofil 22 auf, das spiegelsymmetrisch zu der Profilsehne p und einer Tangente an der Umlaufbahn U mit dem Radius r ausgerichtet ist. Das Rotorblatt 2 ist aus drei in sich starren extrudierten Hohlprofilen 11 aufgebaut, die aus einem vorderen Flügelsegment 221 mit einer Flügelnase n, einem mittleren Flügelsegment 222 im Bereich der maximalen Profildicke q und einem hinteren Flügelsegment 223 mit einer Flügelhinterkante e bestehen. Das mittlere Flügelsegment 222 weist ein Tragprofil 200 auf und bildet ein Widerlager für Aktoren 24, die von pneumatischen Muskeln 241 in einer paarweisen Anordnung gebildet werden. Das vordere und das hintere Flügelsegment 221, 223 sind jeweils in Scharnieren 220 mit Drehachsen y an das mittlere Flügelsegment 222 angelenkt. Die paarweise angeordneten pneumatischen Muskeln 241 sind jeweils mit einem von dem Radius r1 gebildeten Hebelarm von der an der Stellposition tangential zu der Umlaufbahn U angeordneten Profilsehne p beabstandet. Steuerungseinheiten an dem vorderen Flügelsegment 221 und an dem hinteren Flügelsegment 223 bilden ein Gegengewicht 225 zu den beiden Flügelsegmenten 221, 223, sodass bei einem schnell rotierenden Rotormodul keine zentrifugalen Kräfte auftreten und die pneumatischen Muskeln 241 an den Stellpositionen die für die Blattverstellung erforderlichen Kräfte aufzubringen haben. Die Verkürzung der pneumatischen Muskeln 241 bewirkt, dass die an den Stellpositionen tangential zu der Umlaufbahn U ausgerichtete Profilsehne p in der luv- und leeseitigen Hälfte der Umlaufbahn U jeweils einen positiven Anstellwinkel α, von zwei bis drei Grad gegenüber einer Tangente an der Umlaufbahn U aufweist. Das mittlere Flügelsegment 222 ist als ein Hohlprofil 11 ausgebildet. Haarfugen 226 zwischen den Flügelsegmenten 221-223 ermöglichen die laminare Umströmung des variablen Flügelprofils 22 in jeder Betriebsstellung.

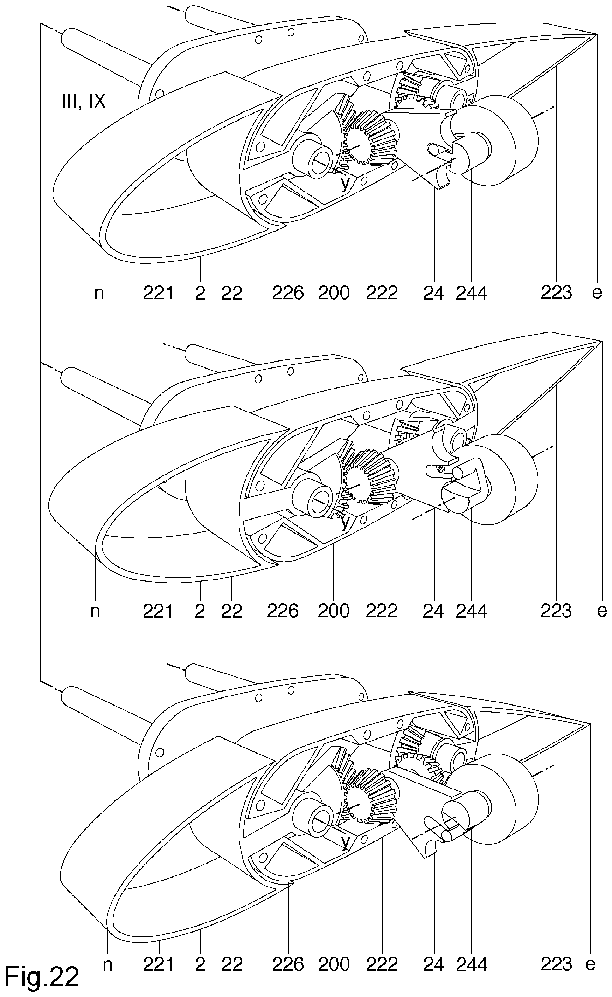

**Fig. 22** oben zeigt ein Rotorblatt 2 mit einem variablen symmetrischen Flügelprofil 22 für die in Fig. 3-5 gezeigten Umlaufposition III, IX an denen jeweils die Saugseite es variablen Flügelprofils 22 von der Außenseite zu der Innenseite der Umlaufbahn U wechselt, und in der Mitte und unten jeweils mit einem variablen, asymmetrischen Flügelprofil 22 bei dem der Aktor 24 einen Schrittmotor 242 mit einem von einem Zylindergesperre gebildeten Schritt- Rastgetriebe 244 gebildet wird. Das vordere Flügelsegment 221 und das hintere Flügelsegment 223 ist jeweils an eine Drehachse y des mittleren Flügelsegments 222 angelenkt und wird mit einem von dem Schrittmotor 242 angetriebenen Kegelradgetriebe derart verstellt, dass sich das vordere und das hintere Flügelsegment 221, 223 an den Umlaufpositionen III, IX wie in Fig. 3-5 gezeigt jeweils mit gegensinniger Drehrichtung zur Innen- oder zur Außenseite der Umlaufbahn U ein- oder ausdrehen, wobei sich die Drehrichtung des Schrittmotors 242 in einem Umlauf des Rotorblatts 2 an den an den Umlaufpositionen III, IX zweimal ändert. Die perspektivische Explosionsdarstellung des Aktors 24 zeigt einen Bereich innerhalb eines Längsabschnitts des Rotorblatts 2 mit den Flügelsegmenten 221-223, die z.B. als Aluminiumstrang-Pressprofile mit nicht näher bezeichneten Schraubkanälen zur Verbindung der einzelnen Teile des Rotorblatts 2 hergestellt werden können. Das hier dargestellte Schritt-Rast-Getriebe 244 mit Zylindergesperren benötigt für die Beibehaltung des variablen, asymmetrischen Flügelprofils 22 mit getauschten Saugseiten in den beiden Hälften der Umlaufbahn U keinen zusätzlichen Energieaufwand, sodass von dem Schrittmotor 242 vergleichsweise geringe Verstellkräfte aufzubringen sind, da sich das variable Flügelprofil 22 an den an den Umlaufpositionen III, IX wie in Fig. 3-5 gezeigt in einer Fahnenstellung befindet.

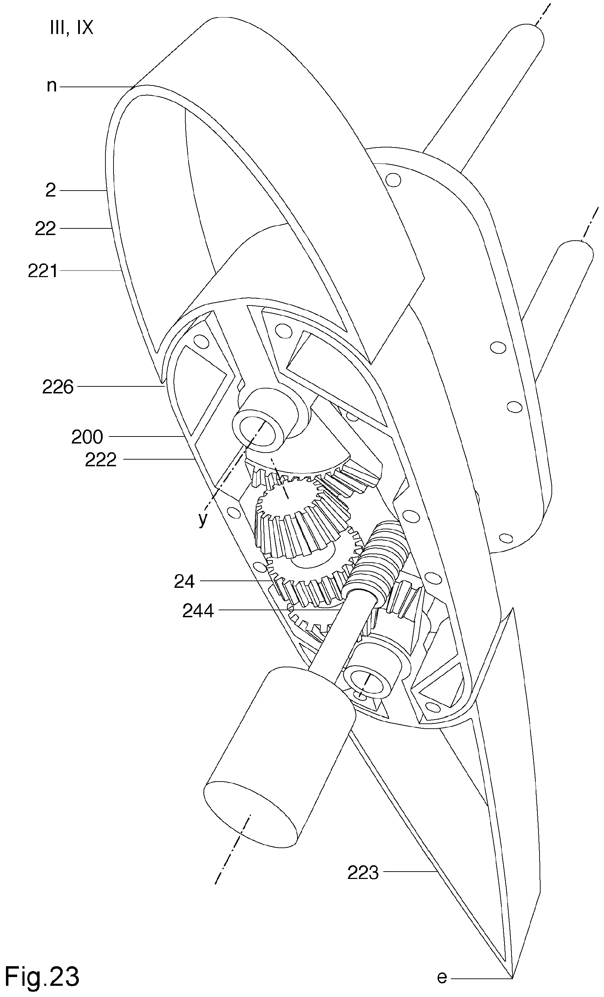

**Fig. 23** zeigt ein Rotorblatt 2, bei dem der Aktor 24 der Rotorblattverstellung einen Schrittmotor 242 mit einem Schneckenrad für das Schritt- Rastgetriebe 244 aufweist, in einer perspektivischen Explosionsdarstellung eines Abschnitts des Rotorblatts 2 an den Umlaufpositionen III, IX wie in Fig. 3-5 gezeigt. Das Rotorblatt 2 entspricht in seinem Aufbau im Wesentlichen dem in Fig. 22 ausführlich erläuterten Ausführungsbeispiel. Im Unterschied zu Fig. 22 weist das Schritt-Rast-Getriebe 244 hier einen Elektromotor 16 auf, dessen Drehachse parallel zu den Drehachsen y des vorderen und des hinteren Flügelsegments 221, 223 ausgerichtet ist.

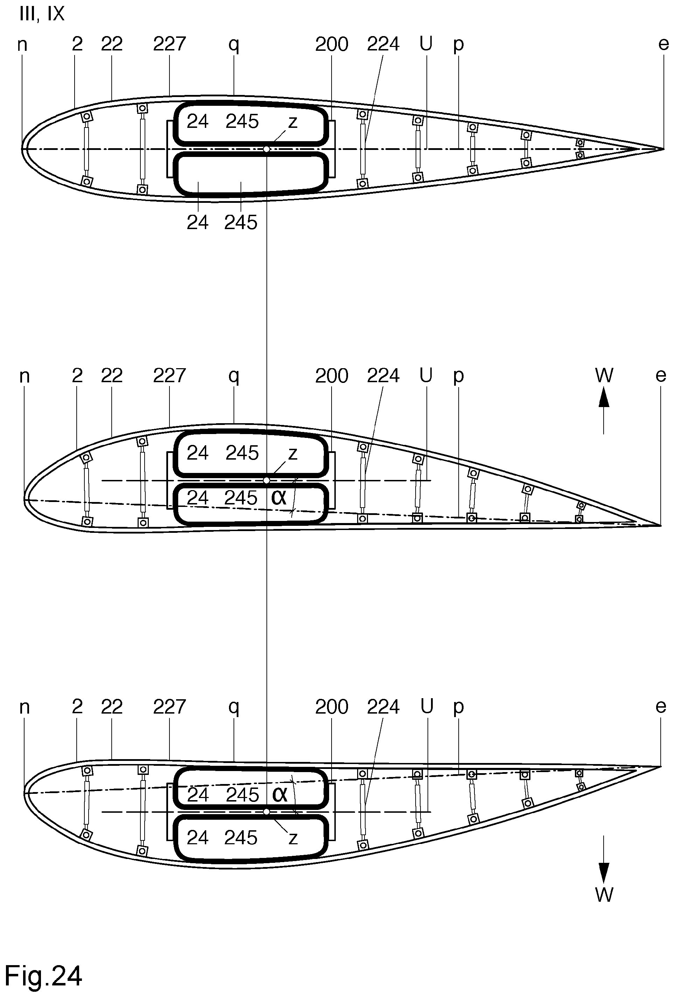

**Fig. 24** zeigt ein mehrteilig ausgebildetes Rotorblatt 2 mit einer in sich geschlossenen dehnsteifen und biegeweichen Flügelschale 227 des variablen Flügelprofils 22, oben an den Umlaufpositionen III, IX mit einem symmetrischen Flügelprofil 22 und in der Mitte und unten jeweils im luv- und leeseitigen Umlauf mit einem asymmetrischen Flügelprofil 22. Wie in Fig. 3-5 gezeigt, ist die Profilsehne p an den Umlaufpositionen III, IX tangential zu der Umlaufbahn U ausgerichtet. Das Rotorblatt 2 besitzt ein zentrales, invariantes Tragprofil 200, das als Doppel-T-Träger ausgebildet ist und ein Widerlager für zwei kraftschlüssig mit dem Tragprofil 200 verbundene elastische Faltenbalge 245 bildet, die im Bereich der maximalen Profildicke q an der Umlaufbahn U einander gegenüber liegen und kraftschlüssig mit der biegeweichen und dehnsteifen Flügelschale 227 verbunden sind. Im vorderen und hinteren Drittel des variablen Flügelprofils 22 ist die Flügelschale 227 mittels einer Mehrzahl von Stegen 224, die entweder biegesteif oder gelenkig mit der Flügelschale 227 verbunden sind, ausgesteift. Die Faltenbalge 245 sind an nicht näher bezeichneten, von Kompressoren, Ventilen, und Sensoren gebildete Steuerungseinheiten angeschlossen, sodass Druckluft von dem jeweils einen in den jeweils anderen Faltenbalg 245 gepumpt werden kann. Dadurch wird im Inneren des Rotorblatts 2 ein ungleicher Druck in den beiden Hälften des variablen Flügelprofils 22 hergestellt, sodass sich das variable Flügelprofil 22 mit einer zwangsläufigen Kinematik elastisch verformt, wodurch eine Seite des variablen Flügelprofils 22 eine Saugseite ausbildet und die Profilsehne p gegenüber einer Tangente an der Umlaufbahn U jeweils einen positiven Anstellwinkel α einnimmt. Die Stell- und Haltefunktion der Aktuatoren 24 kann mittels einer Pneumatik für zwei korrespondierende Faltenbalge 245 auf einfache Weise realisiert werden. Bei großen Windkraftanlagen 1 mit einem Rotordurchmesser von zweihundert Metern beträgt die Umlaufzeit des Rotorblatts 2 mehr als eine Minute, sodass an den in Fig. 3-5 gezeigten Umlaufpositionen III, IX genügend Zeit für die Blattverstellung zur Verfügung steht. Im Unterschied zu einem Darrieus-Rotor, bei dem an den Umlaufpositionen III, IX ein schlagartiger Lastwechsel von Nachteil ist und die Struktur der Windturbine extrem beansprucht, baut die hier beschriebene allmähliche Blattverstellung an den Umlaufpositionen III, IX aerodynamisch bewirkte Lastspitzen ab, sodass das Tragwerk A der Windkraftanlage 1 entlastet wird.

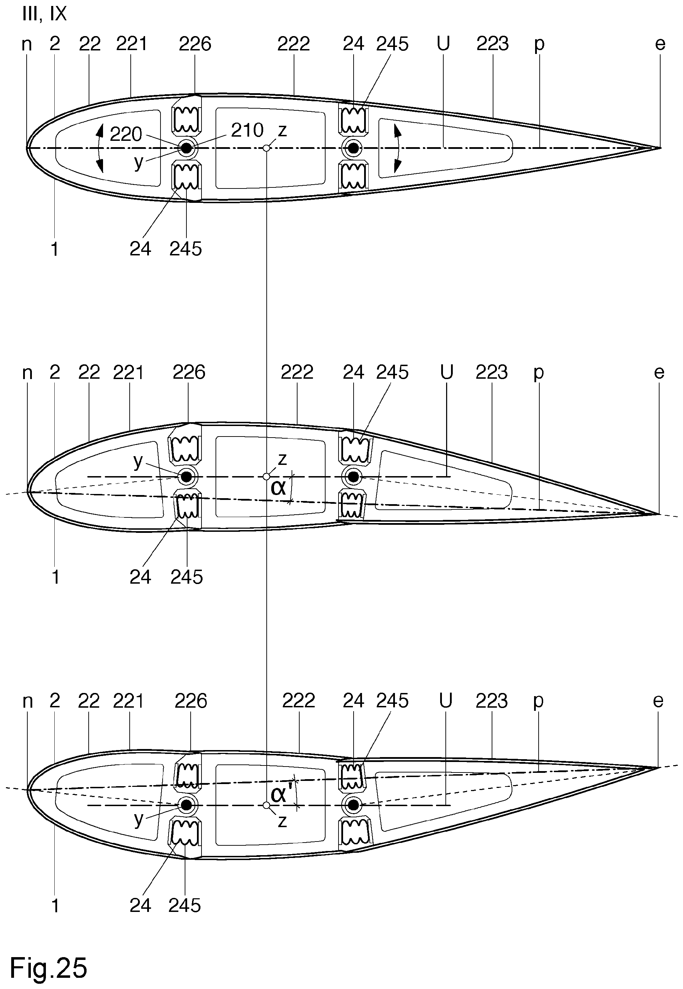

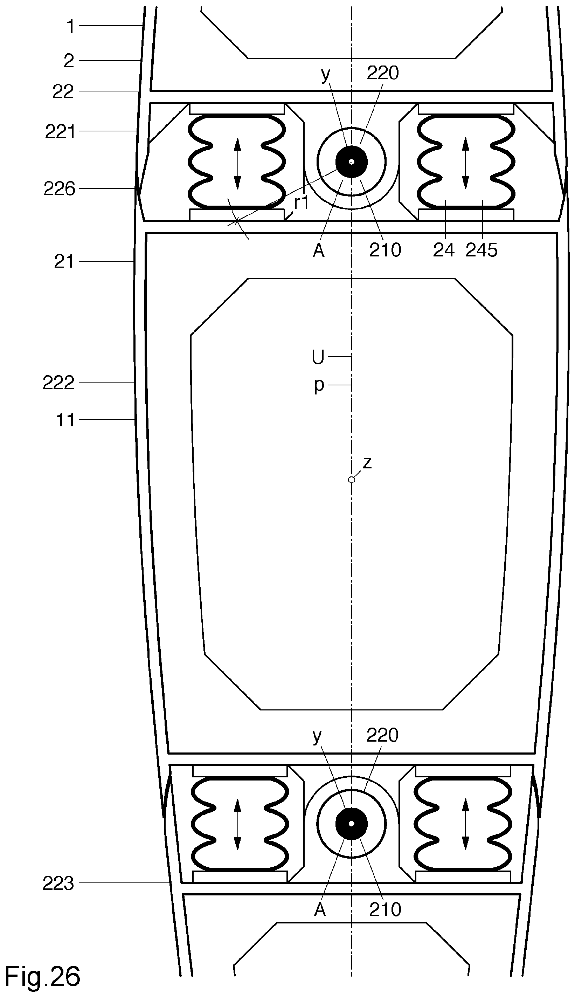

**Fig. 25** zeigt ein dreiteiliges Rotorblatt 2 für eine Windkraftanlage 1, bei der das Tragwerk ein Seiltragwerk 21 aufweist und das Rotorblatt 2 mit jeweils konzentrisch und koaxial zu den Drehachsen y der Flügelsegmente 221-223 angeordneten Tragseilen 210 verbunden ist. Nicht näher dargestellte Klemmen mit Gelenken an den Tragseilen 210 stellen bevorzugt die Verbindung der drei Flügelsegmente 221-223 zu dem Seiltragwerk 21 her. Das Rotorblatt ist in drei schematischen Querschnitten dargestellt, oben an den Umlaufpositionen III, IX eines zur Windrichtung W ausrichtbaren Durchmessers der Umlaufbahn U, wie in Fig. 3-5 gezeigt, und in der Mitte und unten jeweils im luv- und leeseitigen Umlauf. An den Umlaufpositionen weist das variable Flügelprofil 22 ein symmetrisches Flügelprofil 22 auf, das spiegelsymmetrisch zu der Profilsehne p und einer Tangente an der Umlaufbahn U ausgerichtet ist. Das mittlere Flügelsegment 222 bildet ein Widerlager für vier Faltenbalge 245, die jeweils wie in Fig. 26 gezeigt mit einem Radius r1 von der Drehachse y radial beabstandet sind. Druckluft wird mittels nicht näher bezeichneter Kompressoren, Ventile und Sensoren einer Steuerungseinheit zwischen jeweils zwei an den Scharnieren 220 paarweise einander gegenüberliegenden Faltenbalge 245 ungleich verteilt, sodass sich ein Faltenbalg 245 verlängert, während sich der andere verkürzt. Auf diese Weise sind die Saugseiten des variablen asymmetrischen Flügelprofils 22 bei der Windkraftanlage 1 jeweils in Windrichtung W ausrichtbar. Die Aktoren 24 bewirken dabei, dass die an den Umlaufpositionen III, IX tangential zur Umlaufbahn U ausgerichtete Profilsehne p des variablen asymmetrischen Flügelprofils 22 in der luv- und leeseitigen Hälfte der Umlaufbahn U jeweils einen positiven Anstellwinkel α von zwei bis drei Grad gegenüber einer Tangente an der Umlaufbahn U einnimmt. Das mittlere Flügelsegment 222 ist als ein Hohlprofil 11 ausgebildet. Haarfugen 226 an Überblattungsstößen zwischen den Flügelsegmenten 221-223 ermöglichen die laminare Umströmung des variablen Flügelprofils 22 in jeder Betriebsstellung des Rotorblatts.

**Fig. 26** zeigt das dreiteilige bzw. dreigliedrige Rotorblatt 2, bei dem zwei Tragseile 210 als ein integraler Bestandteil eines Seiltragwerks 21 ausgebildet sind in einem Detailschnitt des mittleren Flügelsegments 222, das ein Widerlager für vier Faltenbalge 245 bildet, die jeweils mit einem radialen Abstand r1 von den Drehachsen y für das vordere und das hintere Flügelsegment 221, 223 beabstandet sind, und als pneumatische Aktoren 24 ausgebildet sind.

Naturgemäß sind im Rahmen der vorliegenden Erfindung vielfältige Abwandlungen und Modifikationen möglich.

Der mindestens eine Stator 100 kann in allen Ausführungsbeispielen in unabhängig voneinander schaltbare Ringsegmente aufgeteilt sein, und die Windkraftanlage 1 ist dazu eingerichtet, in Abhängigkeit von den auf den Rotor R wirkenden Windkräften die Ringsegmente teilweise zu bestromen, um den auf den Rotor R wirkenden Windkräften entgegen zu wirken. Durch eine solche Nutzung des Motorgenerators 10 als Motor können durch die Bestromung zusätzliche anziehende oder abstoßende Magnetkräfte erzeugt werden, welche die übrige Struktur der Windkraftanlage 1 in extremen Situationen mit starkem Wind kräftemäßig entlasten können.

**Bezugszeichenübersicht**

| | | | |
|---|---|---|---|
| Windkraftanlage | 1 | Rotorblatt | 2 |
| Vertikale Rotationsachse | x | Gitterschale | 20 |
| Drehachse | y | Tragprofil | 200 |
| Längsachse | Z | Knotenpunkt | 201 |
| Tragwerk | A | Seiltragwerk | 21 |
| Basis | B | Tragseil | 210 |
| Ringträger | R1-Rn | Spannseil | 211 |
| Nabe | N1-Nn | Tellerfeder | 212 |
| Positiver Anstellwinkel | α | Variables Flügelprofil | 22 |
| Rotor | R | Radius | r, r1 |
| Umlaufbahn | U | Flügelnase | n |
| Versatzwinkel | δ | Flügelhinterkante | e |
| Höhe | h | Profilsehne | p |
| Neigungswinkel | β | Profildicke | q |
| Windrichtung | W | Scharnier | 220 |
| Luftspalt | a | Vorderes Flügelsegment | 221 |
| Motorgenerator | 10 | Mittleres Flügelsegment | 222 |
| Stator | 100 | Hinteres Flügelsegment | 223 |
| Fahrweg | 101 | Steg | 224 |
| Läufer | 102 | Gegengewicht | 225 |
| Erregerwicklung | 103 | Haarfuge | 226 |
| Permanentmagnet | 104 | Flügelschale | 227 |
| Kabel | 105 | Ringflügel | 23 |
| Hohlprofil | 11 | Aktor | 24 |
| Gleis | 110 | Schlauch | 240 |
| Hinterschnitt | 111 | Pneumatischer Muskel | 241 |
| Schiene | 112 | Schrittmotor | 242 |
| Kippsicherung | 12 | Gewindeabschnitt | 243 |
| Fahrwerk | 13 | Schritt- Rastgetriebe | 244 |
| Mast | 14 | Faltenbalg | 245 |
| Kegelrollenlager | 140 | Umlaufposition | I-XII |

## Patentansprüche

1. Windkraftanlage (1) mit einer Basis (B), einem Rotor (R) und mindestens einem Motorgenerator (10),
welcher mindestens eine Motorgenerator (10) einen Stator (100) und einen Läufer (102) aufweist,
welche Basis (B) ein ringförmiges, nach oben offenes Hohlprofil (11) aufweist, welcher Rotor (R) ein Tragwerk (A), ein Fahrwerk (13) und eine vertikale Rotationsachse (x) aufweist und sich mit einem konstanten oder mit einem wechselnden Radius (r) zu der vertikalen Rotationsachse (x) über eine Höhe (h) zwischen einem unteren, der Basis (B) zugewandten Ringträger (R1) und mindestens einem oberen Ringträger (R2-Rn) erstreckt und eine Vielzahl von mehrteilig ausgebildeten Rotorblättern (2) mit variablen Flügelprofilen (22) und mit geraden Längsachsen (z) aufweist, welche variablen Flügelprofile (22) Profilsehnen (p) zwischen Flügelnasen (n) und Flügelhinterkanten (e) haben,
welcher Rotor (R) eine Umlaufbahn (U) aufweist,
welches Tragwerk (A) einen integralen Bestandteil der mit dem unteren Ringträger (R1) verbundenen Rotorblätter (2) bildet und
- entweder als eine selbsttragende, aus Tragprofilen (200), Ringträgern (R1-Rn) und Spannseilen (211) aufgebaute Gitterschale (20)
- oder als ein von einem koaxial und konzentrisch zu der Rotationsachse (x) angeordneten Mast (14) abgespanntes Seiltragwerk (21) mit Tragseilen (210) und mit Spannseilen (211)
ausgebildet ist,
welcher untere Ringträger (R1) mit dem Fahrwerk (13) und dem Läufer (102) des mindestens einen Motorgenerators (10) verbunden ist, wobei der Stator (100) und der Läufer (102) in dem nach oben offenen Hohlprofil (11) angeordnet sind, welches ringförmige, nach oben offene Hohlprofil (11) mit dem Stator (100) des mindestens einen Motorgenerators (10) verbunden ist, welches Fahrwerk (13) mit einem Hinterschnitt (111) in das Hohlprofil (11) eingreift und eine Kippsicherung (12) für den Rotor (R) bildet, wobei ein Luftspalt (a) mit einem definierten Spaltmaß zwischen dem Stator (100) und dem Läufer (102) vorgesehen ist, und welcher Läufer (102) im Betrieb der Windkraftanlage (1) an den Stator (100) herangezogen wird.

2. Windkraftanlage (1) nach Anspruch 1,
bei welcher das mehrteilige Rotorblatt (2) mindestens dreiteilig ausgebildet ist und ein vorderes Flügelsegment (221), ein mittleres Flügelsegment (222) und ein hinteres Flügelsegment (223) für das variable Flügelprofil (22) aufweist, wobei das vordere und das hintere Flügelsegment (221, 223) an Scharnieren (220) mit Drehachsen (y) für einen definierten Schwenkbereich derart an das mittlere Flügelsegment (222) angelenkt sind, dass das variable Flügelprofil (22) in einem Umlauf des Rotors (R) unterschiedliche Betriebsstellungen einnehmen kann und an zwei auf der Umlaufbahn einander gegenüberliegenden Umlaufposition (III, IX) ein symmetrisches Flügelprofil (22) mit einer tangential zu der kreisförmigen Umlaufbahn (U) des Rotors (R) ausgerichteten Profilsehne (p), und im luv- und leeseitigen Umlauf des Rotors (R) ein asymmetrisches Flügelprofil (22) aufweist, dessen Saugseite derart wechselt, dass im Regelbetrieb der Windkraftanlage (1) die Saugseite im luvseitigen Umlauf des Rotors (R) zu der Innenseite und im leeseitigen Umlauf des Rotors (R) zu der Außenseite der Umlaufbahn (U) orientiert ist und für eine Begrenzung der Drehzahl des Rotors (R) im Sturmbetrieb die Saugseite im luvseitigen Umlauf des Rotors (R) zu der Außenseite und im leeseitigen Umlauf des Rotors (R) zu der Innenseite der Umlaufbahn (U) orientierbar ist, wobei das Ein- und Ausdrehen der Flügelsegmente (221, 223) mittels einer pneumatisch, elektrisch oder hydraulisch betreibbaren Rotorblattverstellung erfolgt.

3. Windkraftanlage (1) nach Anspruch 2,
bei der das mindestens dreiteilige Rotorblatt (2) an den Umlaufpositionen (III, IX) der Umlaufbahn (U) ein symmetrisches Flügelprofil (22) aufweist, dessen Profilsehne (p) tangential zu der kreisförmigen Umlaufbahn (U) des Rotors (R) ausgerichtet ist und die Profilsehne (p) bei einem durch Ein- und Ausdrehen des vorderen und hinteren Flügelsegments (221, 223) auf der Umlaufbahn (U) variierten asymmetrischen Flügelprofil (22) einen positiven Anstellwinkel (α) gegenüber einer Tangente an der Umlaufbahn (U) des Rotors (R) aufweist, wobei das mittlere Flügelsegment (222) im Falle einer Gitterschale (20) als ein kastenförmiges Tragprofil (200) ausgebildet ist, dessen auf der Umlaufbahn (U) einander gegenüberliegenden Flansche einen Teil der Oberfläche des variablen Flügelprofils (22) bilden und eine Vielzahl von Tragprofilen (200) durch Knotenpunkte (201) untereinander und mit den queraussteifenden, seilverspannten Ringträgern (R1-Rn) verbunden sind, um die selbsttragende Gitterschale (20) zu bilden, die sich in Form eines Rotationshyperboloids zu dem ringförmigen Sockel (B) hin erweitert und dreieckige und/oder viereckige Felder hat.

4. Windkraftanlage (1) nach Anspruch 2 oder 3, bei der für das Ein- und Ausdrehen des vorderen und des hinteren Flügelsegments (221, 223) die Rotorblätter (2) als Rotorblattverstellung einen doppelseitig wirksamen Aktor (24) mit einem Schritt-Rastgetriebe (244) und mit einer Antriebswelle mit Zylindergesperren für die Flügelsegmente (221, 223) aufweisen, wobei die Drehrichtung des Schritt-Rastgetriebes (244) in einem Umlauf des Rotorblatts (2) jeweils an den Umlaufpositionen (III, IX) wechselt.

5. Windkraftanlage (1) nach einem der Ansprüche 2 bis 4,
bei der das Tragwerk (A) als selbsttragende, aus Tragprofilen (200), Ringträgern (R1-Rn) und Spannseilen (211) aufgebaute Gitterschale (20) ausgebildet ist, bei welcher an den Umlaufpositionen (III, IX) der Umlaufbahn (U) mindestens vier an den Scharnieren (220) des vorderen und des hinteren Flügelsegments (221, 223) jeweils paarweise einander gegenüber liegende von Faltenbalgen (245) gebildete Aktoren (24) als Rotorblattverstellung derart betätigt werden, dass Druckluft von einem Faltenbalg (245) in den jeweils gegenüberliegenden Faltenbalg (245) gepumpt wird, sodass sich die Länge des entleerten Faltenbalgs (245) verkürzt und die Länge des aufgepumpten Faltenbalgs (245) verlängert und auf diese Weise das vordere und das hintere Flügelsegment (221, 223) an den Drehachsen (y), jeweils mit gegensinniger Drehrichtung um maximal 7 Grad gegenüber dem mittleren, von dem Tragprofil (200) gebildeten Flügelsegment (222) gedreht werden.

6. Windkraftanlage (1) nach einem der Ansprüche 2 bis 5,
bei der das Tragwerk (A) als selbsttragende, aus Tragprofilen (200), Ringträgern (R1-Rn) und Spannseilen (211) aufgebaute Gitterschale (20) ausgebildet ist, bei der das mittlere Flügelsegment (222) als kastenförmiges Tragprofil (200) ausgebildet ist, bei der das variable Flügelprofil (22) des mehrteiligen Rotorblatts (2) an den Umlaufpositionen (III, IX) der Umlaufbahn (U) ein symmetrisches Flügelprofil (22) aufweist, dessen Profilsehne (p) tangential zu der kreisförmigen Umlaufbahn (U) des Rotors (R) ausgerichtet ist und die Profilsehne (p) eines durch Ein- und Ausdrehen des vorderen und hinteren Flügelsegments (221, 223) variierten asymmetrischen Flügelprofils (22) einen positiven Anstellwinkel (α) gegenüber einer Tangente an der Umlaufbahn (U) des Rotors (R) aufweist, wobei das kastenförmige Tragprofil (200) des mittleren Flügelsegments (222) auf der Umlaufbahn (U) einander gegenüberliegende Flansche aufweist, die den mittleren Teil der Oberfläche des variablen Flügelprofils (22) bilden.

7. Windkraftanlage (1) nach einem der Ansprüche 2 bis 6,
bei der das vordere und das hintere Flügelsegment (221, 223) jeweils mit einem Hebelarm und mit einem Gegengewicht (225) um die Drehachsen (y) der Scharniere (220) des mittleren Flügelsegments (222) angelenkt sind und in das von dem Hohlprofil (11) gebildete mittlere Flügelsegment (222) hineinragen, sodass an dem rotierenden Rotor (R) zentrifugale Kräfte des vorderen und des hinteren Flügelsegments (221, 223) ausbalanciert werden.

8. Windkraftanlage (1) nach einem der Ansprüche 2 bis 7,
bei der das Tragwerk (A) als selbsttragende, aus Tragprofilen (200), Ringträgern (R1-Rn) und Spannseilen (211) aufgebaute Gitterschale (20) ausgebildet ist, bei der das mittlere Flügelsegment (222) als kastenförmiges Tragprofil (200) ausgebildet ist, bei welcher die Rotorblattverstellungen Aktoren (24) aufweisen, welche Aktoren (24) als lineare Schrittmotoren (242) mit Stator (100) und Läufer (102) ausgebildet und in das von dem Tragprofil (200) gebildete mittlere Flügelsegment (222) integriert sind und die linearen Schrittmotoren (242) zylinderförmige Schieber betätigen, die an ihren Innenseiten an koaxial und konzentrisch zu den beiden Drehachsen (y) angeordneten Scharnieren (220) linear geführt werden und an ihren Außenseiten in Gewindeabschnitte (243) der vorderen und der hinteren Flügelsegmente (221, 223) eingreifen und die Schieber mit einer elektromagnetisch oder hydraulisch oder pneumatisch oder mechanisch angetriebenen linearen Translationsbewegung das Ein- und Ausdrehen der Flügelsegmente (221, 223) gegenüber dem von dem kastenförmigen Tragprofil (200) gebildeten mittleren Flügelsegment (222) bewirken und bevorzugt eine geringe Steigung der Gewindeabschnitte (243) eine Übersetzung von 1 zu 10 für die Kraft der Aktoren (20) bewirkt.

9. Windkraftanlage (1) nach einem der Ansprüche 2 bis 8,
bei welcher die Rotorblattverstellungen Aktoren (24) aufweisen, welche Aktoren (24) als radiale Schrittmotoren (242) ausgebildet sind und einen von zwei Blechpaketen mit gegensinnigen Erregerwicklungen (103) gebildeten Stator (100) aufweisen der in jedem Längsabschnitt in das mittlere Flügelsegment (222) des Rotorblatts (2) integriert ist und zusammen mit alternierend gepolten Permanentmagneten (104) der Läufer (102) den Schrittmotor (242) bildet, bei dem die Permanentmagnete (104) mit dem Radius (r3) um die Drehachsen (z) ein Gegengewicht (225) zu dem vorderen und dem hinteren Flügelsegment (221, 223) des Rotorblatts (2) bilden, sodass Luftspalte (a) zwischen den Permanentmagneten (104) des Läufers (102) und den beiden Blechpaketen des Stators (100) eine berührungslose elektrische Verbindung zwischen dem mittleren Flügelsegment (222) und den vorderen und hinteren Flügelsegmenten (221, 223) herstellen, wobei durch Umpolung der Erregerwicklungen (103) das elektrische Ein- und das Ausdrehen des vorderen und des hinteren Flügelsegments (221, 223) auf der Umlaufbahn (U) jeweils gegenläufig und simultan erfolgt.

10. Windkraftanlage (1) nach einem der vorausgehenden Ansprüche,
bei der der Rotor (R) ein Seiltragwerk (21) aufweist, das mittels von Trag- und Spannseilen (210, 211) von einem koaxial und konzentrisch zu der Rotationsachse (x) angeordneten Mast (14) abgespannt ist und eine erste Gruppe von Tragseilen (210) die Rotorblätter (2) trägt und mittels von an den unteren Ringträger (R1) angreifenden Tellerfedern (212) derart vorgespannt ist, dass auch die jeweils leeseitigen Tragseile (210) in allen Betriebszuständen der Windkraftanlage (1) unter Zugspannung stehen und eine zweite Gruppe von Tragseilen (210) die Naben (N1-Nn) mit den Ringträgern (R1-Rn) verbindet und von oben an die Ringträger (R1-Rn) angreift, während Spannseile (211), die die Ringträger (R1-Rn) mit den Naben (N1-Nn) verbinden, von unten an die Ringträger (R1-Rn) angreifen und die Naben (N1-Nn) mittels von Kegelrollenlagern (140) an Queraussteifungen des von einer Stahlröhre gebildeten Masts (14) gelagert und mit dem Mast (14) verbunden sind, wobei die oberen und die unteren Trag- und Spannseile (210, 211) gegenüber dem Radius (r) der Ringträger (R1-Rn) jeweils einen gegensätzlichen Versatzwinkel (δ) aufweisen und die Trag- und Spannseile (210, 211) mittels einer Mehrzahl von hintereinander in Hülsen angeordneten Tellerfedern (212) vorgespannt sind und zusammen mit den Ringträgern (R1-Rn) und den Naben (N1-Nn) torsionssteife Speichenräder bilden, die das von den Rotorblättern (2) erzeugte Drehmoment aufnehmen.

11. Windkraftanlage (1) nach einem der vorausgehenden Ansprüche,
bei welcher ein Fahrweg (101) des Motorgenerators (10) mindestens ein innerhalb des ringförmigen Hohlprofils (11) verlegtes Gleis (110) mit zueinander geneigten Fahrschultern von Schienen (112) für Räder (132) mit Spurkränzen (133) des Fahrwerks (13) aufweist und das Fahrwerk (13) über eine Vielzahl von Fahrgestellen (130) jeweils mit mindestens zwei Radsätzen (131) mit dem unteren Ringträger (R1) derart verbunden ist, dass die Räder (132) mittels von konischen Radlaufflächen formschlüssig auf den zueinander geneigten Fahrschultern der Schienen (112) geführt werden und die Räder (132) im Falle des von einem Mast (14) abgespannten Seiltragwerks (21) in dem Hinterschnitt (111) des ringförmigen Hohlprofils (11) an hängenden Schienen (112) geführt werden und die Kippsicherung (12) für den Rotor (R) bilden, wobei im Falle der selbsttragenden Gitterschale (20) und des Seiltragwerks (21) im Betrieb der Windkraftanlage (1) magnetische Anziehungskräfte des Motorgenerators (10) aktiviert werden, um den Rotor (R) mit den Schienen (112) zu verspannen.

12. Windkraftanlage (1) nach einem der vorausgehenden Ansprüche,
bei welcher der Motorgenerator (10) als eine synchron erregte, dreiphasige Drehstrommaschine mit einem Durchmesser von 2 m bis 500 m ausgebildet ist, wobei der Läufer (102) der Drehstrommaschine entweder Tragmagnete mit einer Erregerwicklungen (103) oder Permanentmagnete (104) aufweist und der Stator (100) Blechpakete (100) mit dreiphasigen Paketwicklungen für einen stählernen Fahrweg (101) aufweist, sodass der Rotor (R) im Betrieb der Windkraftanlage (1) magnetisch an den Fahrweg (101) herangezogen wird und eine aktive Kippsicherung (12) dadurch gebildet wird, dass in Übereinstimmung mit der Windrichtung (W) der Motorgenerator (10) jeweils nur auf der luvseitige Hälfte aktiviert ist.

13. Windkraftanlage (1) nach einem der vorausgehenden Ansprüche,
bei der innerhalb des ringförmigen Hohlprofils (11) mindestens vier Motorgeneratoren (10) angeordnet sind, die ein mit dem unteren Ringträger (R1) des Rotors (R) verbundenes Fahrwerk (13) mit zwei oberen und zwei unteren, auf einem im Querschnitt polygonalen Hohlprofil (11) jeweils diagonal gegeneinander versetzt angeordneten Statoren (100) mit vier Fahrwegen (101) für vier mit dem Ringträger (R1) des Rotors (R) verbundene Läufer (102) der Motorgeneratoren (10) aufweisen, wobei die Motorgeneratoren (10) jeweils in eine Mehrzahl ringförmiger Segmente untergliedert sind, sodass, abhängig von der jeweiligen Windrichtung (W) im luvseitigen Umlauf des Rotors (R), die beiden unteren Motorgeneratoren (10) aktiviert werden und den Rotor (R) an die Basis (B) heranziehen, während im leeseitigen Umlauf des Rotors (R) die beiden oberen Motorgeneratoren (10) aktiviert werden und den Rotor (R) von der Basis (B) abstoßen und auf diese Weise eine aktive Kippsicherung (12) für den Rotor (R) gebildet wird, wobei bevorzugt die Räder (132) die Fahrgestelle (130) des Fahrwerks (13) auf der von dem Gleis (110) gebildeten Spur halten.

14. Windkraftanlage (1) nach einem der vorausgehenden Ansprüche,
bei der das von vier jeweils mit einem Winkel von 45 Grad zueinander angeordneten Motorgeneratoren (10) gebildete Fahrwerk (13) im Betrieb der Windkraftanlage (1) eine berührungslose Lagerung des Rotors (R) in dem ringförmigen Hohlprofil (11) der Basis (B) ermöglicht, bei welcher mindestens ein Stator (100) in unabhängig voneinander schaltbare Ringsegmente aufgeteilt ist, und welche Windkraftanlage (1) dazu eingerichtet ist, in Abhängigkeit von den auf den Rotor (R) wirkenden Windkräften die Ringsegmente teilweise zu bestromen, um den auf den Rotor (R) wirkenden Windkräften entgegen zu wirken.

15. Windkraftanlage (1) nach einem der vorausgehenden Ansprüche,
bei der das Tragwerk (A) als selbsttragende, aus Tragprofilen (200), Ringträgern (R1-Rn) und Spannseilen (211) aufgebaute Gitterschale (20) ausgebildet ist, bei der das mehrteilige Rotorblatt (2) eine dehnsteife und biegeweiche Flügelschale (227) aufweist, die mit einer Vielzahl von quer zu der Profilsehne (p) angeordneten Stegen (224) verbunden ist, wobei Druckluft zwei Faltenbalge (245), für die das Tragprofil (200) ein Widerlager bildet, alternierend schrumpft und dehnt, sodass die Saugseite des variablen Flügelprofils (22) an den Umlaufpositionen (III, IX) von der Außenseite zu der Innenseite der Umlaufbahn (U) wechselt und umgekehrt, wobei sich die biegeweiche und dehnsteife Flügelschale (227) des Rotorblatts (2) reversibel verformt.

## Claims

1. A wind turbine (1) with a base (B), a rotor arrangement (R) and at least one motor generator (10),
which at least one motor generator (10) has a stator (100) and a rotor (102),
which base (B) has an annular, upwardly open hollow profile (11),
which rotor arrangement (R) has a support structure (A), a chassis (13) and a vertical axis of rotation (x) and extends with a constant or with a changing radius (r) with respect to the vertical axis of rotation (x) over a height (h) between a lower ring carrier (R1) facing the base (B) and at least one upper ring carrier (R2-Rn) and has a plurality of multi-part rotor blades (2) with variable wing profiles (22) and with straight longitudinal axes (z), which variable wing profiles (22) have chord lines (p) between leading edges (n) and trailing edges (e),
which rotor arrangement (R) has an orbit (U),
which support structure (A) forms an integral part of the rotor blades (2) connected to the lower ring carrier (R1) and
- is formed either as a self-supporting lattice shell (20) constructed of support profiles (200), ring carriers (R1-Rn) and tensioning cables (211)
- or is formed as a cable-supported structure (21) braced by support cables (210) and tension cables (211) from a mast (14) arranged coaxially and concentrically with the axis of rotation (x),
which lower ring carrier (R1) is connected to the chassis (13) and the rotor (102) of the at least one motor generator (10), wherein the stator (100) and the rotor (102) are arranged in the upwardly open hollow profile (11), which annular, upwardly open hollow profile (11) is connected to the stator (100) of the at least one motor generator (10), which chassis (13) engages with an undercut (111) in the hollow profile (11) and forms an anti-tilting mechanism (12) for the rotor arrangement (R), wherein an air gap (a) with a defined gap dimension is provided between the stator (100) and the rotor (102), and which rotor (102) is pulled towards the stator (100) during operation of the wind turbine (1).

2. The wind turbine (1) according to claim 1,
in which the multi-part rotor blade (2) is formed in at least three parts and has a front wing segment (221), a middle wing segment (222) and a rear wing segment (223) for the variable wing profile (22), wherein the front and rear wing segments (221, 223) are hinged to the middle wing segment (222) at hinges (220) with axes of rotation (y) for a defined pivoting range in such a way that the variable wing profile (22) can assume different operating positions in one revolution of the rotor arrangement (R) and at two opposite orbital positions (III, IX) on the orbit has a symmetrical wing profile (22) with a chord line (p) oriented tangentially to the circular orbit (U) of the rotor arrangement (R), and an asymmetrical wing profile (22) in the windward and leeward revolution of the rotor arrangement (R), the suction side of which wing profile changes in such a way that, during normal operation of the wind turbine (1), the suction side is oriented toward the inside of the orbit during the windward rotation of the rotor arrangement (R) and toward the outside of the orbit (U) during the leeward rotation of the rotor arrangement (R) and, in order to limit the speed of the rotor arrangement (R) during storm operation, the suction side can be oriented towards the outside in the windward revolution of the rotor arrangement (R) and towards the inside of the orbit (U) in the leeward revolution of the rotor arrangement (R), wherein the rotating in and out of the wing segments (221, 223) is carried out by a rotor blade adjustment operable pneumatically, electrically, or hydraulically.

3. The wind turbine (1) according to claim 2,
in which the at least three-part rotor blade (2) has a symmetrical wing profile (22) at the orbital positions (III, IX) of the orbit (U), the chord line (p) of which profile is oriented tangentially to the circular orbit (U) of the rotor arrangement (R), and the profile chord line (p) has a positive angle of attack (a) relative to a tangent to the orbit (U) of the rotor arrangement (R) in the case of an asymmetrical wing profile (22) varied by rotating the front and rear wing segments (221, 223) in and out on the orbit (U), wherein, in the case of a lattice shell (20), the middle wing segment (222) is formed as a box-shaped support profile (200) whose flanges, which are opposite each other on the orbit (U), form part of the surface of the variable wing profile (22), and a plurality of support profiles (200) are connected to each other by nodes (201) and with the transversely stiffening, cable-braced ring carriers (R1-Rn) to form the self-supporting lattice shell (20), which widens in the form of a rotational hyperboloid toward the annular socket (B) and has triangular and/or quadrangular fields.

4. The wind turbine (1) according to claim 2 or 3, in which, for rotating the front and rear wing segments (221, 223) in and out, the rotor blades (2) have, as a rotor blade adjustment mechanism, a 2-side-acting actuator (24) with a step-lock gear (244) and a drive shaft with cylinder locks for the wing segments (221, 223), wherein the direction of rotation of the step-lock gear (244) changes respectively at the orbital positions (III, IX) during one revolution of the rotor blade (2).

5. The wind turbine (1) according to any of claims 2 to 4,
in which the support structure (A) is formed as a self-supporting lattice shell (20) constructed from support profiles (200), ring carriers (R1-Rn), and tension cables (211), in which, at the orbital positions (III, IX) of the orbital path (U), at least four actuators (24) formed by bellows (245) and arranged in pairs opposite each other at the hinges (220) of the front and rear wing segments (221, 223) are actuated as a rotor blade adjustment in such a manner that compressed air is pumped from one bellows (245) into the respective opposite bellows (245), so that the length of the deflated bellows (245) is shortened and the length of the inflated bellows (245) is extended, thereby rotating the front and rear wing segments (221, 223) on the axes of rotation (y), each in the opposite direction of rotation, by a maximum of 7 degrees relative to the middle wing segment (222) formed by the support profile (200).

6. The wind turbine (1) according to any of claims 2 to 5,
in which the support structure (A) is formed as a self-supporting lattice shell (20) constructed from support profiles (200), ring carriers (R1-Rn), and tension cables (211), in which the middle wing segment (222) is formed as a box-shaped support profile (200), in which the variable wing profile (22) of the multi-part rotor blade (2) has a symmetrical wing profile (22) at the orbital positions (III, IX) of the orbit (U), the chord line (p) of which profile is oriented tangentially to the circular orbit (U) of the rotor arrangement (R), and the profile chord line (p) of an asymmetrical wing profile (22) varied by rotating the front and rear wing segments (221, 223) in and out on the orbit (U) has a positive angle of attack (a) relative to a tangent to the orbit (U) of the rotor arrangement (R), wherein the box-shaped support profile (200) of the middle wing segment (222) has opposing flanges on the orbit (U), which form the middle part of the surface of the variable wing profile (22).

7. The wind turbine (1) according to any of claims 2 to 6,
in which the front and rear wing segments (221, 223) are respectively hinged with a lever arm and with a counterweight (225) about the axes of rotation (y) of the hinges (220) of the middle wing segment (222) and protrude into the middle wing segment (222) formed by the hollow profile (11), so that centrifugal forces of the front and rear wing segments (221, 223) are balanced on the rotating rotor arrangement (R).

8. The wind turbine (1) according to any of claims 2 to 7,
in which the support structure (A) is formed as a self-supporting lattice shell (20) constructed from support profiles (200), ring carriers (R1-Rn), and tension cables (211), in which the middle wing segment (222) is formed as a box-shaped support profile (200), in which the rotor blade adjustments have actuators (24), which actuators (24) are formed as linear stepper motors (242) with stator (100) and mover (102) and are integrated into the middle wing segment (222) formed by the support profile (200), wherein the linear stepper motors (242) actuate cylindrical sliders, which are guided linearly on their inner sides on hinges (220) arranged coaxially and concentrically to the two axes of rotation (y) and engage on their outer sides in threaded sections (243) of the front and rear wing segments (221, 223) and wherein the sliders, with an electromagnetically or hydraulically or pneumatically or mechanically driven linear translational movement, effect the rotating in and out of the wing segments (221, 223) relative to the middle wing segment (222) formed by the box-shaped support profile (200) and wherein preferably a small pitch of the threaded sections (243) effects a ratio of 1 to 10 for the force of the actuators (20).

9. The wind turbine (1) according to any of claims 2 to 8,
in which the rotor blade adjustments have actuators (24), which actuators (24) are formed as radial stepper motors (242) and have a stator (100), formed by two laminated cores with opposing excitation windings (103), which is integrated in each longitudinal section into the middle wing segment (222) of the rotor blade (2) and in which, together with alternately poled permanent magnets (104), the mover (102) forms the stepper motor (242), in which the permanent magnets (104) with the radius (r3) about the axes of rotation (z) form a counterweight (225) to the front and rear wing segments (221, 223) of the rotor blade (2), so that air gaps (a) between the permanent magnets (104) of the mover (102) and the two laminated cores of the stator (100) produce a contactless electrical connection between the middle wing segment (222) and the front and rear wing segments (221, 223), wherein, by reversing the polarity of the excitation windings (103), the electrical rotating in and out of the front and rear wing segments (221, 223) on the orbit (U) respectively takes place in opposite directions and simultaneously.

10. The wind turbine (1) according to any of the preceding claims, in which the rotor arrangement (R) has a cable support structure (21) which is braced by support and tension cables (210, 211) from a mast (14) arranged coaxially and concentrically with the axis of rotation (x), and wherein a first group of support cables (210) supports the rotor blades (2) and is preloaded by means of disc springs (212) acting on the lower ring carrier (R1) in such a manner that the leeward support cables (210) are also under tensile load in all operating states of the wind turbine (1) and a second group of support cables (210) connects the hubs (N1-Nn) to the ring carriers (R1-Rn) and acts on the ring carriers (R1-Rn) from above, while tension cables (211), which connect the ring carriers (R1-Rn) to the hubs (N1-Nn), act on the ring carriers (R1-Rn) from below, and the hubs (N1-Nn) are mounted on cross stiffeners of the mast (14) formed by a steel tube by means of tapered roller bearings (140) and are connected to the mast (14), wherein the upper and lower support and tension cables (210, 211) have an opposite offset angle (5) relative to the radius (r) of the ring carriers (R1-Rn), and the support and tension cables (210, 211) are preloaded by means of a plurality of disc springs (212) arranged one behind the other in sleeves and, together with the ring carriers (R1-Rn) and the hubs (N1-Nn) form torsion-resistant spoked wheels which receive the torque generated by the rotor blades (2).

11. The wind turbine (1) according to any of the preceding claims, in which a travel path (101) of the motor generator (10) has at least one track (110) laid within the annular hollow profile (11) with inclined travel shoulders of rails (112) for wheels (132) with wheel flanges (133) of the chassis (13), and the chassis (13) has a connection to the lower ring carrier (R1) via a plurality of bogies (130), each with at least two wheel sets (131), in such a way that the wheels (132) are guided in a form-fitting manner on the inclined travel shoulders of the rails (112) by means of conical wheel running surfaces, and that the wheels (132) are guided in the undercut (111) of the annular hollow profile (11) on suspended rails (112) in the case of a cable support structure (21) braced from a mast (14), and form the anti-tilting mechanism (12) for the rotor arrangement (R), wherein, in the case of the self-supporting lattice shell (20) and the cable support structure (21), magnetic attractive forces of the motor generator (10) are activated during operation of the wind turbine (1) to tension the rotor arrangement (R) with the rails (112).

12. The wind turbine (1) according to any of the preceding claims, in which the motor generator (10) is formed as a synchronously excited, three-phase alternating current machine with a diameter of 2 m to 500 m, wherein the rotor (102) of the three-phase machine has either support magnets with excitation windings (103) or permanent magnets (104), and the stator (100) has laminated cores (100) with three-phase core windings for a steel travel path (101), so that during operation of the wind turbine (1), the rotor arrangement (R) is magnetically pulled toward the travel path (101), and an active anti-tilting mechanism (12) is formed by activating the motor generator (10) only on the windward half in accordance with the wind direction (W).

13. The wind turbine (1) according to any of the preceding claims, in which at least four motor generators (10) are arranged within the annular hollow profile (11), which have a chassis (13) connected to the lower ring carrier (R1) of the rotor arrangement (R) with two upper and two lower stators (100) arranged diagonally opposite each other on a hollow profile (11) with a polygonal cross section (11) with four travel paths (101) for four rotors (102) of the motor generators (10) connected to the ring carrier (R1) of the rotor arrangement (R), wherein the motor generators (10) are each subdivided into a plurality of annular segments, so that, depending on the respective wind direction (W) in the windward revolution of the rotor arrangement (R), the two lower motor generators (10) are activated and pull the rotor arrangement (R) toward the base (B), while in the leeward revolution of the rotor arrangement (R), the two upper motor generators (10) are activated and repel the rotor arrangement (R) from the base (B), thereby forming an active anti-tilting mechanism (12) for the rotor arrangement (R), wherein preferably the wheels (132) keep the bogies (130) of the chassis (13) on the running path formed by the track (110).

14. The wind turbine (1) according to any of the preceding claims, in which the chassis (13) formed by four motor generators (10) arranged at an angle of 45 degrees to each other enables contactless bearing of the rotor arrangement (R) in the annular hollow profile (11) of the base (B) during operation of the wind turbine (1), in which at least one stator (100) is divided into ring segments that can be switched independently of one another, and which wind turbine (1) is configured to partially energize the ring segments in dependence on the wind forces acting on the rotor arrangement (R) in order to counteract the wind forces acting on the rotor arrangement (R).

15. The wind turbine (1) according to any of the preceding claims, in which the support structure (A) is formed as a self-supporting lattice shell (20) constructed from support profiles (200), ring carriers (R1-Rn), and tension cables (211), wherein the multi-part rotor blade (2) has a wing shell (227) that is extensionally rigid and flexionally soft, which is connected to a plurality of webs (224) arranged transversely to the chord line (p), wherein compressed air alternately shrinks and expands two bellows (245) for which the support profile (200) forms an abutment, so that the suction side of the variable wing profile (22) changes from the outside to the inside of the orbit (U) at the orbit positions (III, IX) and vice versa, wherein the flexionally soft and extensionally rigid blade shell (227) of the rotor blade (2) is reversibly deformed.

## Revendications

1. Éolienne (1) dotée d'une base (B), d'un ensemble rotor (R) et d'au moins un moteur-générateur (10),
le au moins un moteur-générateur (10) présentant un stator (100) et un rotor (102),
la base (B) présentant un profil creux (11) annulaire, ouvert vers le haut,
l'ensemble rotor (R) présentant une structure porteuse (A), un châssis (13) et un axe de rotation vertical (x) et s'étendant en fonction d'un rayon (r) constant ou variable par rapport à l'axe de rotation vertical (x) sur une hauteur (h) entre une poutre annulaire (R1) inférieure orientée vers la base (B) et au moins une poutre annulaire (R2-Rn) supérieure et présentant une pluralité de pales de rotor (2) en plusieurs parties et ayant des profils de pale variables (22) et des axes longitudinaux (z) droits, lesdits profils de pale variables (22) ayant des cordes de profil (p) entre des bords d'attaque (n) et des bords de fuite (e),
l'ensemble rotor (R) présentant une orbite (U),
la structure porteuse (A) formant partie intégrante des pales de rotor (2) reliées à la poutre annulaire (R1) inférieure et étant réalisée
- soit sous la forme d'une coquille en treillis (20) autoportante constituée de profils porteurs (200), de poutres annulaires (R1-Rn) et de câbles tendeurs (211),
- soit sous la forme d'un mât (14) haubané par une structure porteuse à câbles (21) disposé de manière coaxiale et concentrique par rapport à l'axe de rotation (x) et munie de câbles porteurs (210) et de câbles tendeurs (211),
la poutre annulaire (R1) inférieure étant reliée au châssis (13) et au rotor (102) du au moins un moteur-générateur (10), le stator (100) et le rotor (102) étant disposés dans le profil creux (11) ouvert vers le haut, le profil creux (11) annulaire, ouvert vers le haut, étant relié au stator (100) du au moins un moteur-générateur (10), le châssis (13) s'engageant par une contre-dépouille (111) dans le profil creux (11) et formant un mécanisme anti-basculement (12) pour l'ensemble rotor (R), un entrefer (a) d'une dimension définie étant disposé entre le stator (100) et le rotor (102), et le rotor (102) étant attiré vers le stator (100) pendant le fonctionnement de l'éolienne (1).

2. Éolienne (1) selon la revendication 1,
dans laquelle la pale de rotor (2) en plusieurs parties est conçue en au moins trois parties et présente un segment de pale avant (221), un segment de pale central (222) et un segment de pale arrière (223) pour le profil de pale variable (22), les segments de pale avant et arrière (221, 223) étant articulés au niveau du segment de pale central (222) sur des charnières (220) à axes de rotation (y) pour une plage de pivotement définie de telle sorte que le profil de pale variable (22) peut prendre différentes positions de fonctionnement au cours d'une rotation de l'ensemble rotor (R) et présente, à deux positions de rotation (III, IX) opposées l'une à l'autre sur l'orbite, un profil de pale symétrique (22) avec une corde de profil (p) alignée tangentiellement à l'orbite (U) circulaire de l'ensemble rotor (R) et, dans le sens de rotation côté vent et côté sous le vent de l'ensemble rotor (R), un profil de pale asymétrique (22) dont le côté aspiration change de telle sorte que, en fonctionnement normal de l'éolienne (1), le côté aspiration est orienté vers l'intérieur de l'orbite (U) en cas de rotation de l'ensemble rotor (R) côté vent et vers l'extérieur de l'orbite (U) en cas de rotation de l'ensemble rotor (R) côté sous le vent, et pour limiter la vitesse de rotation de l'ensemble rotor (R) en mode tempête, le côté aspiration peut être orienté vers l'extérieur de l'orbite (U) en cas de rotation de l'ensemble rotor (R) côté vent et vers l'intérieur de l'orbite (U) en cas de rotation de l'ensemble rotor (R) côté sous le vent, le pivotement vers l'intérieur et vers l'extérieur des segments de pale (221, 223) s'effectuant au moyen d'un dispositif de réglage des pales de rotor à commande pneumatique, électrique ou hydraulique.

3. Éolienne (1) selon la revendication 2,
dans laquelle la pale de rotor (2) composée d'au moins trois parties présente, aux positions de rotation (III, IX) de l'orbite (U), un profil de pale symétrique (22) dont la corde de profil (p) est orientée tangentiellement à l'orbite (U) circulaire de l'ensemble rotor (R) et dont la corde de profil (p) présente un angle d'attaque positif (α) par rapport à une tangente à l'orbite (U) de l'ensemble rotor (R) dans le cas d'un profil de pale asymétrique (22) qui varie en faisant pivoter vers l'intérieur et vers l'extérieur les segments de pale avant et arrière (221, 223) sur l'orbite (U), le segment de pale central (222) étant conçu, dans le cas de figure d'une coquille en treillis (20), sous la forme d'un profil porteur (200) en forme de caisson dont les brides opposées sur l'orbite (U) forment une partie de la surface du profil de pale variable (22) et une pluralité de profils porteurs (200) étant reliés par des points nodaux (201) entre eux et avec les poutres annulaires (R1-Rn) renforcées transversalement et tendues par des câbles, afin de former la coquille en treillis (20) autoportante qui s'élargit sous la forme d'un hyperboloïde de rotation vers la base annulaire (B) et a des champs triangulaires et/ou quadrangulaires.

4. Éolienne (1) selon la revendication 2 ou 3, dans laquelle, pour faire pivoter vers l'intérieur et vers l'extérieur les segments de pale avant et arrière (221, 223), les pales de rotor (2) présentent, en tant que mécanisme de réglage des pales de rotor, un actionneur (24) à double effet doté d'un engrenage à crans (244) et d'un arbre d'entraînement avec encliquetages cylindriques pour les segments de pale (221, 223), le sens de rotation de l'engrenage à crans (244) alternant à chaque tour de la pale de rotor (2) aux positions de rotation (III, IX).

5. Éolienne (1) selon l'une des revendications 2 à 4,
dans laquelle la structure porteuse (A) est conçue comme une coquille en treillis (20) autoportante, constituée de profils porteurs (200), de poutres annulaires (R1 - Rn) et de câbles tendeurs (211), dans laquelle, aux positions de rotation (III, IX) de l'orbite (U), au moins quatre actionneurs (24) formés par des soufflets (245) disposés par paires opposées au niveau des charnières (220) des segments de pale avant et arrière (221, 223) sont actionnés en tant que dispositif de réglage des pales du rotor de telle manière que de l'air comprimé est pompé d'un soufflet (245) dans le soufflet (245) opposé, de sorte que la longueur du soufflet (245) vidé se raccourcit et que la longueur du soufflet (245) gonflé s'allonge, faisant pivoter les segments de pale avant et arrière (221, 223) sur les axes de rotation (y), chacun dans le sens inverse, de 7 degrés maximum par rapport au segment de pale central (222) formé par le profil porteur (200).

6. Éolienne (1) selon l'une des revendications 2 à 5,
dans laquelle la structure porteuse (A) est conçue comme une coquille en treillis (20) autoportante, composée de profils porteurs (200), de poutres annulaires (R1-Rn) et de câbles tendeurs (211), le segment de pale central (222) est conçu comme un profil porteur (200) en forme de caisson, le profil de pale variable (22) de la pale de rotor (2) en plusieurs parties présente, aux positions de rotation (III, IX) de l'orbite (U), un profil de pale symétrique (22) dont la corde de profil (p) est orientée tangentiellement à l'orbite (U) de l'ensemble rotor (R) et la corde de profil (p) d'un profil de pale asymétrique (22) qui varie par pivotement vers l'intérieur et vers l'extérieur des segments de pale avant et arrière (221, 223) présente un angle d'attaque positif (α) par rapport à une tangente à l'orbite (U) de l'ensemble rotor (R), le profil porteur (200) en forme de caisson du segment de pale central (222) présentant sur l'orbite (U) des brides opposées qui forment la partie centrale de la surface du profil de pale variable (22).

7. Éolienne (1) selon l'une des revendications 2 à 6,
dans laquelle les segments de pale avant et arrière (221, 223) sont chacun articulés à l'aide d'un bras de levier et d'un contrepoids (225) autour des axes de rotation (y) des charnières (220) du segment de pale central (222) et s'étendent dans le segment de pale central (222) formé par le profil creux (11), de sorte que les forces centrifuges des segments de pale avant et arrière (221, 223) sont équilibrées au niveau de l'ensemble rotor (R) en rotation.

8. Éolienne (1) selon l'une des revendications 2 à 7,
dans laquelle la structure porteuse (A) est conçue comme une coquille en treillis (20) autoportante, constituée de profils porteurs (200), de poutres annulaires (R1-Rn) et de câbles tendeurs (211), le segment de pale central (222) est conçu comme un profil porteur (200) en forme de caisson, les dispositifs de réglage des pales du rotor présentent des actionneurs (24), lesquels actionneurs (24) sont réalisés sous la forme de moteurs pas à pas (242) linéaires avec stator (100) et patin (102) et sont intégrés dans le segment de pale central (222) formé par le profil porteur (200), et les moteurs pas à pas (242) linéaires actionnent des coulisseaux cylindriques qui sont guidés linéairement sur leurs côtés intérieurs par des charnières (220) disposées de manière coaxiale et concentrique par rapport aux deux axes de rotation (y) et qui s'engagent sur leurs côtés extérieurs dans des sections filetées (243) des segments de pale avant et arrière (221, 223) et actionnent les coulisseaux avec un mouvement de translation linéaire à entraînement électromagnétique ou hydraulique ou pneumatique ou mécanique pour faire pivoter les segments de pale (221, 223) vers l'intérieur et vers l'extérieur par rapport au segment de pale central (222) formé par le profil porteur (200) en forme de caisson et, de préférence, une faible inclinaison des sections filetées (243) provoque une transmission de 1 à 10 pour la force des actionneurs (20).

9. Éolienne (1) selon l'une des revendications 2 à 8,
dans laquelle les dispositifs de réglage des pales du rotor présentent des actionneurs (24), lesquels actionneurs (24) sont conçus sous la forme de moteurs pas à pas (242) radiaux et présentent un stator (100) qui est formé de deux paquets de tôle avec des enroulements d'excitation (103) de sens opposés et qui est intégré dans chaque section longitudinale dans le segment de pale central (222) de la pale de rotor (2) et forme, conjointement avec des aimants permanents (104) à polarité alternée, le patin (102) du moteur pas à pas (242), les aimants permanents (104) au rayon (r3) autour des axes de rotation (z) formant un contrepoids (225) aux segments de pale avant et arrière (221, 223) de la pale de rotor (2), de sorte que des entrefers (a) entre les aimants permanents (104) du patin (102) et les deux paquets de tôle du stator (100) établissent une connexion électrique sans contact entre le segment de pale central (222) et les segments de pale avant et arrière (221, 223), l'inversion de polarité des enroulements d'excitation (103) provoque respectivement l'activation et la désactivation électriques des segments de pale avant et arrière (221, 223) sur l'orbite (U) simultanément et en sens inverse.

10. Éolienne (1) selon l'une des revendications précédentes, dans laquelle l'ensemble rotor (R) comporte une structure porteuse à câbles (21) qui est tendue au moyen de câbles porteurs et tendeurs (210, 211) à partir d'un mât (14) disposé de manière coaxiale et concentrique par rapport à l'axe de rotation (x), et un premier groupe de câbles porteurs (210) supporte les pales du rotor (2) et est précontraint au moyen de ressorts à disque (212) agissant sur la poutre annulaire (R1) inférieure de telle sorte que les câbles porteurs (210) respectifs situés du côté sous le vent sont également sous tension dans tous les états de fonctionnement de l'éolienne (1), et un deuxième groupe de câbles porteurs (210) relie les moyeux (N1-Nn) aux poutres annulaires (R1-Rn) et entre en contact avec les poutres annulaires (R1-Rn) par le haut, tandis que les câbles tendeurs (211) qui relient les poutres annulaires (R1-Rn) aux moyeux (N1-Nn) s'engagent par le bas dans les poutres annulaires (R1-Rn) et les moyeux (N1-Nn) sont logés au moyen de roulements à rouleaux coniques (140) sur des renforts transversaux du mât (14) formé par un tube en acier et sont reliés au mât (14), les câbles porteurs et tendeurs (210, 211) supérieurs et inférieurs présentant chacun un angle de décalage (δ) opposé par rapport au rayon (r) des poutres annulaires (R1-Rn) et les câbles porteurs et tendeurs (210, 211) étant précontraints au moyen d'une pluralité de ressorts à disques (212) disposés les uns derrière les autres dans des douilles et formant, conjointement avec les poutres annulaires (R1-Rn) et les moyeux (N1-Nn), des roues à rayons résistantes à la torsion qui absorbent le couple généré par les pales de rotor (2).

11. Éolienne (1) selon l'une des revendications précédentes,
dans laquelle une voie de roulement (101) du moteur-générateur (10) présente au moins une voie (110) posée à l'intérieur du profil creux (11) annulaire et munie d'épaulements de roulement de rails (112), inclinés les uns vers les autres, pour roulettes (132) avec des boudins (133) du châssis (13) et le châssis (13) est relié à la poutre annulaire (R1) inférieure par l'intermédiaire d'une pluralité de bogies (130) comportant chacun au moins deux essieux (131), de telle sorte que les roulettes (132) sont guidées par complémentarité de forme sur les épaulements de roulement de rails (112), inclinés les uns par rapport aux autres, au moyen de surfaces de roulement coniques, et les roulettes (132), dans le cas d'un mât (14) haubané par une structure porteuse à câbles (21), sont guidées dans la contre-dépouille (111) du profil creux (11) annulaire sur des rails (112) suspendus, et forment le mécanisme anti-basculement (12) pour l'ensemble rotor (R), les forces d'attraction magnétiques du moteur-générateur (10) étant activées dans le cas de figure de la coquille en treillis (20) autoportante et de la structure porteuse à câbles (21) pendant le fonctionnement de l'éolienne (1) afin de serrer les rails (112) contre l'ensemble rotor (R) .

12. Éolienne (1) selon l'une des revendications précédentes, dans laquelle le moteur-générateur (10) est conçu sous la forme d'une machine triphasée à excitation synchrone d'un diamètre compris entre 2 m et 500 m, le rotor (102) de la machine triphasée présentant des aimants de support avec des enroulements d'excitation (103) ou des aimants permanents (104), et le stator (100) présentant des paquets de tôle (100) avec des enroulements triphasés pour une voie de roulement (101) en acier, de sorte que l'ensemble rotor (R) est attiré magnétiquement vers la voie de roulement (101) et qu'un mécanisme anti-basculement (12) actif est formé par le fait que, en fonction de la direction du vent (W), le moteur-générateur (10) n'est activé que sur la moitié côté vent.

13. Éolienne (1) selon l'une des revendications précédentes, dans laquelle au moins quatre moteurs-générateurs (10) sont disposés à l'intérieur du profilé creux (11) annulaire et présentent un châssis (13) relié à la poutre annulaire (R1) inférieure de l'ensemble rotor (R) avec deux stators (100) supérieurs et deux stators (100) inférieurs disposés en quinconce sur un profil creux (11) de section polygonale avec quatre voies de roulement (101) pour quatre rotors (102) des moteurs-générateurs (10) reliés à la poutre annulaire (R1) de l'ensemble rotor (R), les moteurs-générateurs (10) étant chacun subdivisés en une pluralité de segments annulaires, de sorte que, en fonction de la direction respective du vent (W) lors de la rotation de l'ensemble rotor (R) côté vent, les deux moteurs-générateurs (10) inférieurs sont activés et tirent l'ensemble rotor (R) vers la base (B), tandis que, lors de la rotation de l'ensemble rotor (R) sous le vent, les deux moteurs-générateurs (10) supérieurs sont activés et repoussent l'ensemble rotor (R) de la base (B), formant ainsi un mécanisme anti-basculement (12) actif pour l'ensemble rotor (R), les roulettes (132) maintenant de préférence les bogies (130) du châssis (13) sur la piste formée par la voie (110).

14. Éolienne (1) selon l'une des revendications précédentes, dans laquelle le châssis (13) formé par quatre moteurs-générateurs (10) disposés chacun à un angle de 45 degrés les uns par rapport aux autres permet, pendant le fonctionnement de l'éolienne (1), de loger sans contact l'ensemble rotor (R) dans le profil creux (11) annulaire de la base (B), au moins un stator (100) étant divisé en segments annulaires commutables indépendamment les uns des autres, et laquelle éolienne (1) est conçue pour alimenter partiellement les segments annulaires en fonction des forces éoliennes agissant sur l'ensemble rotor (R) afin de contrer les forces éoliennes agissant sur l'ensemble rotor (R).

15. Éolienne (1) selon l'une des revendications précédentes, dans laquelle la structure porteuse (A) est conçue sous la forme d'une coquille en treillis (20) autoportante, constituée de profils porteurs (200), de poutres annulaires (R1-Rn) et de câbles tendeurs (211), la pale de rotor (2) en plusieurs parties présente une coquille de pale (227) rigide en traction et souple en flexion, reliée à une pluralité de nervures (224) disposées transversalement à la corde de profil (p), l'air comprimé rétrécissant et dilatant alternativement deux soufflets (245), pour lesquels le profil porteur (200) forme une butée, de sorte que le côté aspiration du profil de pale variable (22) passe, aux positions de rotation (III, IX), de l'extérieur vers l'intérieur de l'orbite (U) et inversement, la coquille de pale (227) souple en flexion et rigide en traction de la pale de rotor (2) se déformant de manière réversible.
